# EUROPEAN PATENT APPLICATION

(11) **EP 4 598 165 A1**
(43) Date of publication of application: **06.08.2025**
(21) Application number: 23870307.8
(22) Date of filing: 12.09.2023
(51) Int. Cl.: H04W 64/00

(54) **POSITIONING MESSAGE TRANSMISSION METHOD, DEVICE, APPARATUS AND STORAGE MEDIUM**

(30) Priority: 30.09.2022 CN 202211218285
(71) Applicant: Datang Mobile Communications Equipment Co., Ltd., Beijing 100085 (CN)
(72) Inventor: GU, Xiaofei, Beijing 100085 (CN)
(74) Representative: Ipsilon
(86) International application number: PCT/CN2023/118278
(87) International publication number: WO 2024/067069

(57) **Abstract**

Embodiments of the present disclosure provide a positioning message transmission method, a device, an apparatus and a storage medium. The method comprises: a first access and mobility management function network element receives a positioning message sent by a first network element, wherein the positioning message comprises indication information, the indication information is used for indicating that the first access and mobility management function network element sends the positioning message to a second network element, the first network element and the second network element are in different networks, and the first network element or the second network element is in the same network as the first access and mobility management function network element; and sending the positioning message to the second network element according to the indication information.

## Description

### CROSS-REFERENCES TO RELATED APPLICATIONS

The present application claims priority to Chinese patent application No. 202211218285.7 filed on September 30, 2022, entitled "Positioning Message Transmission Method, Device, Apparatus and Storage Medium", which is hereby incorporated by reference in its entirety.

### FIELD

The present application relates to the field of radio communications, and in particular, to methods and apparatuses for positioning message transmission, devices and a storage medium.

### BACKGROUND

For future network architectures, one trend is a network form of large centralization and deep distribution, that is, both centralized network nodes and distributed network nodes must exist in a network, to achieve coexistence of centralized network nodes and distributed network nodes. By organizing through coordination of centralized network nodes and distributed network nodes, and autonomy of distributed network nodes, on one hand, more network functions are extended to an edge of a network, and on the other hand, core functions facing the global are centralized. Through cloud-network integration and distributed coordination, services having more complexity are supported.

In a distributed network scenario, how to satisfy cross-network positioning requirements is a problem that the industry urgently needs to solve.

### BRIEF SUMMARY

Embodiments of the present application provide methods and apparatuses for positioning message transmission, devices and a storage medium, to perform cross-network positioning message transmission, thereby satisfying cross-network positioning requirements in a distributed network scenario.

An embodiment of the present application provides a method for positioning message transmission, performed by a first access and mobility management function network function, including:
receiving a positioning message sent from a first network function, where the positioning message includes indication information, and the indication information is used to indicate the first access and mobility management function network function to send the positioning message to a second network function, where the first network function and the second network function are in different networks, and the first network function or the second network function is in a same network with the first access and mobility management function network function; and
sending the positioning message to the second network function based on the indication information.

In any of the embodiments of the present application, receiving the positioning message sent from the first network function includes:
receiving a positioning message sent from a first gateway mobile location center, where the positioning message includes indication information, and the indication information is used to indicate the first access and mobility management function network function to send the positioning message to a second access and mobility management function network function; or
receiving a positioning message sent from a second access and mobility management function network function, where the positioning message includes indication information, and the indication information is used to indicate the first access and mobility management function network function to send the positioning message to a first gateway mobile location center,
where the first gateway mobile location center and the first access and mobility management function network function are network nodes in a first network, and the second access and mobility management function network function is a network node in a second network.

In any of the embodiments of the present application, receiving the positioning message sent from the first gateway mobile location center includes:
receiving a first request message sent from the first gateway mobile location center, where the first request message is used to request location information of a target user equipment (UE) accessing the second network, the first request message includes first indication information, and the first indication information is used to indicate the first access and mobility management function network function to send the first request message to the second access and mobility management function network function.

In any of the embodiments of the present application, the method further includes:
receiving a first response message sent from the second access and mobility management function network function, where the first response message includes location information of the target UE and second indication information, and the second indication information is used to indicate the first access and mobility management function network function to send the first response message to the first gateway mobile location center.

In any of the embodiments of the present application, receiving the positioning message sent from the second access and mobility management function network function includes:
receiving a second request message sent from the second access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center.

In any of the embodiments of the present application, the method further includes:
receiving a second response message sent from the first gateway mobile location center, where the second response message is used to indicate whether the third network function successfully handles the location information of the target UE, the second response message includes fourth indication information, and the fourth indication information is used to indicate the first access and mobility management function network function to send the second response message to the second access and mobility management function network function.

In any of the embodiments of the present application, before receiving the first response message sent from the second access and mobility management function network function, or before receiving the second request message sent from the second access and mobility management function network function, the method further includes:
receiving a third request message sent from the second access and mobility management function network function, where the third request message is used to request the location information of the target UE, the third request message includes fifth indication information, and the fifth indication information is used to indicate the first access and mobility management function network function to send the third request message to a first location management function network function in the first network; and
receiving a third response message sent from the first location management function network function, where the third response message includes the location information of the target UE and sixth indication information, and the sixth indication information is used to indicate the first access and mobility management function network function to send the third response message to the second access and mobility management function network function.

In any of the embodiments of the present application, before receiving the third request message sent from the second access and mobility management function network function, the method further includes:
receiving a fourth request message sent from the second access and mobility management function network function, where the fourth request message is used to request the first access and mobility management function network function to select a first location management function network function for providing a positioning service for the target UE; and
sending information of the first location management function network function to the second access and mobility management function network function based on the fourth request message.

In any of the embodiments of the present application, the network includes a distributed network or a centralized network.

In any of the embodiments of the present application, the first access and mobility management function network function and the second access and mobility management function network function interact directly with each other, or interact indirectly through a third network.

An embodiment of the present application further provides a method for positioning message transmission, performed by a second access and mobility management function network function, including:
sending a positioning message to a first access and mobility management function network function, where the positioning message includes indication information, and the indication information is used to indicate the first access and mobility management function network function to send the positioning message to a first gateway mobile location center,
where the first gateway mobile location center and the first access and mobility management function network function are network nodes in a first network, and the second access and mobility management function network function is a network node in a second network.

In any of the embodiments of the present application, sending the positioning message to the first access and mobility management function network function includes:
receiving a first request message sent, through the first access and mobility management function network function, from a first gateway mobile location center, where the first request message is used to request location information of a target user equipment (UE) accessing the second network, the first request message includes first indication information, and the first indication information is used to indicate the first access and mobility management function network function to send the first request message to the second access and mobility management function network function; and
sending a first response message to the first access and mobility management function network function based on the first request message, where the first response message includes location information of the target UE and second indication information, and the second indication information is used to indicate the first access and mobility management function network function to send the first response message to the first gateway mobile location center.

In any of the embodiments of the present application, sending the positioning message to the first access and mobility management function network function includes:
sending a second request message to the first access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center.

In any of the embodiments of the present application, before sending the positioning message to the first access and mobility management function network function, the method further includes:
sending a third request message to the first access and mobility management function network function, where the third request message is used to request the location information of the target UE, the third request message includes fifth indication information, and the fifth indication information is used to indicate the first access and mobility management function network function to send the third request message to a first location management function network function in the first network; and
receiving a third response message sent, through the first access and mobility management function network function, from the first location management function network function, where the third response message includes the location information of the target UE and sixth indication information, and the sixth indication information is used to indicate the first access and mobility management function network function to send the third response message to the second access and mobility management function network function.

In any of the embodiments of the present application, before sending the third request message to the first access and mobility management function network function, the method further includes:
sending a fourth request message to the first access and mobility management function network function, where the fourth request message is used to request the first access and mobility management function network function to select a first location management function network function for providing a positioning service for the target UE; and
receiving information of the first location management function network function sent from the first access and mobility management function network function.

An embodiment of the present application further provides a method for positioning message transmission, performed by a first gateway mobile location center, including:
sending a positioning message to a first access and mobility management function network function, where the positioning message includes indication information, and the indication information is used to indicate the first access and mobility management function network function to send the positioning message to a second access and mobility management function network function,
where the first gateway mobile location center and the first access and mobility management function network function are network nodes in a first network, and the second access and mobility management function network function is a network node in a second network.

In any of the embodiments of the present application, sending the positioning message to the first access and mobility management function network function includes:
sending a first request message to the first access and mobility management function network function, where the first request message is used to request location information of a target user equipment (UE) accessing the second network, the first request message includes first indication information, and the first indication information is used to indicate the first access and mobility management function network function to send the first request message to the second access and mobility management function network function.

In any of the embodiments of the present application, sending the positioning message to the first access and mobility management function network function includes:
receiving a second request message sent, through the first access and mobility management function network function, from the second access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center; and
sending a second response message to the first access and mobility management function network function based on the second request message, where the second response message is used to indicate whether the third network function successfully handles the location information of the target UE, the second response message includes fourth indication information, and the fourth indication information is used to indicate the first access and mobility management function network function to send the second response message to the second access and mobility management function network function.

An embodiment of the present application further provides a method for positioning message transmission, performed by a user equipment (UE), including:
establishing a signaling connection between the UE and a second access and mobility management function network function based on a network triggered service request initiated by the second access and mobility management function network function,
where the network triggered service request is initiated by the second access and mobility management function network function based on a received first request message, where the first request message is sent from a first gateway mobile location center to the second access and mobility management function network function through a first access and mobility management function network function, the first request message is used to request location information of the UE, the first request message includes first indication information, and the first indication information is used to indicate the first access and mobility management function network function to send the first request message to the second access and mobility management function network function; and
where the first gateway mobile location center and the first access and mobility management function network function are network nodes in a first network, the second access and mobility management function network function is a network node in a second network, and the UE accesses the second network.

An embodiment of the present application further provides a method for positioning message transmission, performed by a user equipment (UE), including:
sending a fifth request message to a second access and mobility management function network function, where the fifth request message includes information of a third network function, the fifth request message is used to trigger the second access and mobility management function network function to send a second request message to a first access and mobility management function network function, the second request message is used to provide the third network function with location information of the UE, the second request message includes the location information of the UE, information of the third network function and third indication information, and the third indication information is used to indicate the first access and mobility management function network function to send the second request message to a first gateway mobile location center,
where the first gateway mobile location center and the first access and mobility management function network function are network nodes in a first network, the second access and mobility management function network function is a network node in a second network, the UE accesses the second network, and the third network function accesses the first network.

An embodiment of the present application further provides a first access and mobility management function network function, including a memory, a transceiver and a processor,
where the memory is used for storing a computer program, the transceiver is used for receiving and sending data under control of the processor, and the processor is used for reading the computer program in the memory and performing the following operations:
receiving a positioning message sent from a first network function, where the positioning message includes indication information, and the indication information is used to indicate the first access and mobility management function network function to send the positioning message to a second network function, where the first network function and the second network function are in different networks, and the first network function or the second network function is in a same network with the first access and mobility management function network function; and
sending the positioning message to the second network function based on the indication information.

In any of the embodiments of the present application, receiving the positioning message sent from the first network function includes:
receiving a positioning message sent from a first gateway mobile location center, where the positioning message includes indication information, and the indication information is used to indicate the first access and mobility management function network function to send the positioning message to a second access and mobility management function network function; or
receiving a positioning message sent from a second access and mobility management function network function, where the positioning message includes indication information, and the indication information is used to indicate the first access and mobility management function network function to send the positioning message to a first gateway mobile location center,
where the first gateway mobile location center and the first access and mobility management function network function are network nodes in a first network, and the second access and mobility management function network function is a network node in a second network.

In any of the embodiments of the present application, receiving the positioning message sent from the first gateway mobile location center includes:
receiving a first request message sent from the first gateway mobile location center, where the first request message is used to request location information of a target user equipment (UE) accessing the second network, the first request message includes first indication information, and the first indication information is used to indicate the first access and mobility management function network function to send the first request message to the second access and mobility management function network function.

In any of the embodiments of the present application, the operations further include:
receiving a first response message sent from the second access and mobility management function network function, where the first response message includes location information of the target UE and second indication information, and the second indication information is used to indicate the first access and mobility management function network function to send the first response message to the first gateway mobile location center.

In any of the embodiments of the present application, receiving the positioning message sent from the second access and mobility management function network function includes:
receiving a second request message sent from the second access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center.

In any of the embodiments of the present application, the operations further include:
receiving a second response message sent from the first gateway mobile location center, where the second response message is used to indicate whether the third network function successfully handles the location information of the target UE, the second response message includes fourth indication information, and the fourth indication information is used to indicate the first access and mobility management function network function to send the second response message to the second access and mobility management function network function.

In any of the embodiments of the present application, before receiving the first response message sent from the second access and mobility management function network function, or before receiving the second request message sent from the second access and mobility management function network function, the operations further include:
receiving a third request message sent from the second access and mobility management function network function, where the third request message is used to request the location information of the target UE, the third request message includes fifth indication information, and the fifth indication information is used to indicate the first access and mobility management function network function to send the third request message to a first location management function network function in the first network; and
receiving a third response message sent from the first location management function network function, where the third response message includes the location information of the target UE and sixth indication information, and the sixth indication information is used to indicate the first access and mobility management function network function to send the third response message to the second access and mobility management function network function.

In any of the embodiments of the present application, before receiving the third request message sent from the second access and mobility management function network function, the operations further include:
receiving a fourth request message sent from the second access and mobility management function network function, where the fourth request message is used to request the first access and mobility management function network function to select a first location management function network function for providing a positioning service for the target UE; and
sending information of the first location management function network function to the second access and mobility management function network function based on the fourth request message.

In any of the embodiments of the present application, the network includes a distributed network or a centralized network.

In any of the embodiments of the present application, the first access and mobility management function network function and the second access and mobility management function network function interact directly with each other, or interact indirectly through a third network.

An embodiment of the present application further provides a second access and mobility management function network function, including a memory, a transceiver and a processor,
where the memory is used for storing a computer program, the transceiver is used for receiving and sending data under control of the processor, and the processor is used for reading the computer program in the memory and performing the following operations:
sending a positioning message to a first access and mobility management function network function, where the positioning message includes indication information, and the indication information is used to indicate the first access and mobility management function network function to send the positioning message to a first gateway mobile location center,
where the first gateway mobile location center and the first access and mobility management function network function are network nodes in a first network, and the second access and mobility management function network function is a network node in a second network.

In any of the embodiments of the present application, sending the positioning message to the first access and mobility management function network function includes:
receiving a first request message sent, through the first access and mobility management function network function, from a first gateway mobile location center, where the first request message is used to request location information of a target user equipment (UE) accessing the second network, the first request message includes first indication information, and the first indication information is used to indicate the first access and mobility management function network function to send the first request message to the second access and mobility management function network function; and
sending a first response message to the first access and mobility management function network function based on the first request message, where the first response message includes location information of the target UE and second indication information, and the second indication information is used to indicate the first access and mobility management function network function to send the first response message to the first gateway mobile location center.

In any of the embodiments of the present application, sending the positioning message to the first access and mobility management function network function includes:
sending a second request message to the first access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center.

In any of the embodiments of the present application, before sending the positioning message to the first access and mobility management function network function, the operations further include:
sending a third request message to the first access and mobility management function network function, where the third request message is used to request the location information of the target UE, the third request message includes fifth indication information, and the fifth indication information is used to indicate the first access and mobility management function network function to send the third request message to a first location management function network function in the first network; and
receiving a third response message sent, through the first access and mobility management function network function, from the first location management function network function, where the third response message includes the location information of the target UE and sixth indication information, and the sixth indication information is used to indicate the first access and mobility management function network function to send the third response message to the second access and mobility management function network function.

In any of the embodiments of the present application, before sending the third request message to the first access and mobility management function network function, the operations further include:
sending a fourth request message to the first access and mobility management function network function, where the fourth request message is used to request the first access and mobility management function network function to select a first location management function network function for providing a positioning service for the target UE; and
receiving information of the first location management function network function sent from the first access and mobility management function network function.

An embodiment of the present application further provides a first gateway mobile location center, including a memory, a transceiver and a processor,
where the memory is used for storing a computer program, the transceiver is used for receiving and sending data under control of the processor, and the processor is used for reading the computer program in the memory and performing the following operations:
sending a positioning message to a first access and mobility management function network function, where the positioning message includes indication information, and the indication information is used to indicate the first access and mobility management function network function to send the positioning message to a second access and mobility management function network function,
where the first gateway mobile location center and the first access and mobility management function network function are network nodes in a first network, and the second access and mobility management function network function is a network node in a second network.

In any of the embodiments of the present application, sending the positioning message to the first access and mobility management function network function includes:
sending a first request message to the first access and mobility management function network function, where the first request message is used to request location information of a target user equipment (UE) accessing the second network, the first request message includes first indication information, and the first indication information is used to indicate the first access and mobility management function network function to send the first request message to the second access and mobility management function network function.

In any of the embodiments of the present application, sending the positioning message to the first access and mobility management function network function includes:
receiving a second request message sent, through the first access and mobility management function network function, from the second access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center; and
sending a second response message to the first access and mobility management function network function based on the second request message, where the second response message is used to indicate whether the third network function successfully handles the location information of the target UE, the second response message includes fourth indication information, and the fourth indication information is used to indicate the first access and mobility management function network function to send the second response message to the second access and mobility management function network function.

An embodiment of the present application further provides a user equipment (UE), including a memory, a transceiver and a processor,
where the memory is used for storing a computer program, the transceiver is used for receiving and sending data under control of the processor, and the processor is used for reading the computer program in the memory and performing the following operations:
establishing a signaling connection between the UE and a second access and mobility management function network function based on a network triggered service request initiated by the second access and mobility management function network function,
where the network triggered service request is initiated by the second access and mobility management function network function based on a received first request message, where the first request message is sent from a first gateway mobile location center to the second access and mobility management function network function through a first access and mobility management function network function, the first request message is used to request location information of the UE, the first request message includes first indication information, and the first indication information is used to indicate the first access and mobility management function network function to send the first request message to the second access and mobility management function network function; and
where the first gateway mobile location center and the first access and mobility management function network function are network nodes in a first network, the second access and mobility management function network function is a network node in a second network, and the UE accesses the second network.

An embodiment of the present application further provides a user equipment (UE), including a memory, a transceiver and a processor,
where the memory is used for storing a computer program, the transceiver is used for receiving and sending data under control of the processor, and the processor is used for reading the computer program in the memory and performing the following operations:
sending a fifth request message to a second access and mobility management function network function, where the fifth request message includes information of a third network function, the fifth request message is used to trigger the second access and mobility management function network function to send a second request message to a first access and mobility management function network function, the second request message is used to provide the third network function with location information of the UE, the second request message includes the location information of the UE, information of the third network function and third indication information, and the third indication information is used to indicate the first access and mobility management function network function to send the second request message to a first gateway mobile location center,
where the first gateway mobile location center and the first access and mobility management function network function are network nodes in a first network, the second access and mobility management function network function is a network node in a second network, the UE accesses the second network, and the third network function accesses the first network.

An embodiment of the present application further provides an apparatus for positioning message transmission, for use in a first access and mobility management function network function, including:
a first receiving unit, used for receiving a positioning message sent from a first network function, where the positioning message includes indication information, and the indication information is used to indicate the first access and mobility management function network function to send the positioning message to a second network function, where the first network function and the second network function are in different networks, and the first network function or the second network function is in a same network with the first access and mobility management function network function; and
a first sending unit, used for sending the positioning message to the second network function based on the indication information.

In any of the embodiments of the present application, receiving the positioning message sent from the first network function includes:
receiving a positioning message sent from a first gateway mobile location center, where the positioning message includes indication information, and the indication information is used to indicate the first access and mobility management function network function to send the positioning message to a second access and mobility management function network function; or
receiving a positioning message sent from a second access and mobility management function network function, where the positioning message includes indication information, and the indication information is used to indicate the first access and mobility management function network function to send the positioning message to a first gateway mobile location center,
where the first gateway mobile location center and the first access and mobility management function network function are network nodes in a first network, and the second access and mobility management function network function is a network node in a second network.

In any of the embodiments of the present application, receiving the positioning message sent from the first gateway mobile location center includes:
receiving a first request message sent from the first gateway mobile location center, where the first request message is used to request location information of a target user equipment (UE) accessing the second network, the first request message includes first indication information, and the first indication information is used to indicate the first access and mobility management function network function to send the first request message to the second access and mobility management function network function.

In any of the embodiments of the present application, the first receiving unit is further used for:
receiving a first response message sent from the second access and mobility management function network function, where the first response message includes location information of the target UE and second indication information, and the second indication information is used to indicate the first access and mobility management function network function to send the first response message to the first gateway mobile location center.

In any of the embodiments of the present application, receiving the positioning message sent from the second access and mobility management function network function includes:
receiving a second request message sent from the second access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center.

In any of the embodiments of the present application, the first receiving unit is further used for:
receiving a second response message sent from the first gateway mobile location center, where the second response message is used to indicate whether the third network function successfully handles the location information of the target UE, the second response message includes fourth indication information, and the fourth indication information is used to indicate the first access and mobility management function network function to send the second response message to the second access and mobility management function network function.

In any of the embodiments of the present application, the first receiving unit is further used for:
receiving a third request message sent from the second access and mobility management function network function, where the third request message is used to request the location information of the target UE, the third request message includes fifth indication information, and the fifth indication information is used to indicate the first access and mobility management function network function to send the third request message to a first location management function network function in the first network; and
receiving a third response message sent from the first location management function network function, where the third response message includes the location information of the target UE and sixth indication information, and the sixth indication information is used to indicate the first access and mobility management function network function to send the third response message to the second access and mobility management function network function.

In any of the embodiments of the present application, the first receiving unit is further used for:
receiving a fourth request message sent from the second access and mobility management function network function, where the fourth request message is used to request the first access and mobility management function network function to select a first location management function network function for providing a positioning service for the target UE; and
where the first sending unit is further used for:
   sending information of the first location management function network function to the second access and mobility management function network function based on the fourth request message.

In any of the embodiments of the present application, the network includes a distributed network or a centralized network.

In any of the embodiments of the present application, the first access and mobility management function network function and the second access and mobility management function network function interact directly with each other, or interact indirectly through a third network.

An embodiment of the present application further provides an apparatus for positioning message transmission, for use in a second access and mobility management function network function, including:
a second sending unit, used for sending a positioning message to a first access and mobility management function network function, where the positioning message includes indication information, and the indication information is used to indicate the first access and mobility management function network function to send the positioning message to a first gateway mobile location center,
where the first gateway mobile location center and the first access and mobility management function network function are network nodes in a first network, and the second access and mobility management function network function is a network node in a second network.

In any of the embodiments of the present application, sending the positioning message to the first access and mobility management function network function includes:
receiving a first request message sent, through the first access and mobility management function network function, from a first gateway mobile location center, where the first request message is used to request location information of a target user equipment (UE) accessing the second network, the first request message includes first indication information, and the first indication information is used to indicate the first access and mobility management function network function to send the first request message to the second access and mobility management function network function; and
sending a first response message to the first access and mobility management function network function based on the first request message, where the first response message includes location information of the target UE and second indication information, and the second indication information is used to indicate the first access and mobility management function network function to send the first response message to the first gateway mobile location center.

In any of the embodiments of the present application, sending the positioning message to the first access and mobility management function network function includes:
sending a second request message to the first access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center.

In any of the embodiments of the present application, the second sending unit is further used for:
sending a third request message to the first access and mobility management function network function, where the third request message is used to request the location information of the target UE, the third request message includes fifth indication information, and the fifth indication information is used to indicate the first access and mobility management function network function to send the third request message to a first location management function network function in the first network; and
the apparatus further includes a second receiving unit, used for:
   receiving a third response message sent, through the first access and mobility management function network function, from the first location management function network function, where the third response message includes the location information of the target UE and sixth indication information, and the sixth indication information is used to indicate the first access and mobility management function network function to send the third response message to the second access and mobility management function network function.

In any of the embodiments of the present application, the second sending unit is further used for:
sending a fourth request message to the first access and mobility management function network function, where the fourth request message is used to request the first access and mobility management function network function to select a first location management function network function for providing a positioning service for the target UE; and
receiving information of the first location management function network function sent from the first access and mobility management function network function.

An embodiment of the present application further provides an apparatus for positioning message transmission, for use in a first gateway mobile location center, including:
a third sending unit, used for sending a positioning message to a first access and mobility management function network function, where the positioning message includes indication information, and the indication information is used to indicate the first access and mobility management function network function to send the positioning message to a second access and mobility management function network function,
where the first gateway mobile location center and the first access and mobility management function network function are network nodes in a first network, and the second access and mobility management function network function is a network node in a second network.

In any of the embodiments of the present application, sending the positioning message to the first access and mobility management function network function includes:
sending a first request message to the first access and mobility management function network function, where the first request message is used to request location information of a target user equipment (UE) accessing the second network, the first request message includes first indication information, and the first indication information is used to indicate the first access and mobility management function network function to send the first request message to the second access and mobility management function network function.

In any of the embodiments of the present application, sending the positioning message to the first access and mobility management function network function includes:
receiving a second request message sent, through the first access and mobility management function network function, from the second access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center; and
sending a second response message to the first access and mobility management function network function based on the second request message, where the second response message is used to indicate whether the third network function successfully handles the location information of the target UE, the second response message includes fourth indication information, and the fourth indication information is used to indicate the first access and mobility management function network function to send the second response message to the second access and mobility management function network function.

An embodiment of the present application further provides an apparatus for positioning message transmission, for use in a user equipment (UE), including:
a signaling connection establishing unit, used for establishing a signaling connection between the UE and a second access and mobility management function network function based on a network triggered service request initiated by the second access and mobility management function network function,
where the network triggered service request is initiated by the second access and mobility management function network function based on a received first request message, where the first request message is sent from a first gateway mobile location center to the second access and mobility management function network function through a first access and mobility management function network function, the first request message is used to request location information of the UE, the first request message includes first indication information, and the first indication information is used to indicate the first access and mobility management function network function to send the first request message to the second access and mobility management function network function; and
where the first gateway mobile location center and the first access and mobility management function network function are network nodes in a first network, the second access and mobility management function network function is a network node in a second network, and the UE accesses the second network.

An embodiment of the present application further provides an apparatus for positioning message transmission, for use in a user equipment (UE), including:
a fourth sending unit, used for sending a fifth request message to a second access and mobility management function network function, where the fifth request message includes information of a third network function, the fifth request message is used to trigger the second access and mobility management function network function to send a second request message to a first access and mobility management function network function, the second request message is used to provide the third network function with location information of the UE, the second request message includes the location information of the UE, information of the third network function and third indication information, and the third indication information is used to indicate the first access and mobility management function network function to send the second request message to a first gateway mobile location center,
where the first gateway mobile location center and the first access and mobility management function network function are network nodes in a first network, the second access and mobility management function network function is a network node in a second network, the UE accesses the second network, and the third network function accesses the first network.

An embodiment of the present application further provides a computer-readable storage medium, where the computer-readable storage medium stores a computer program, and the computer program is used to cause a computer to perform the methods for positioning message transmission described above.

An embodiment of the present application further provides a communication device, where the communication device stores a computer program, and the computer program is used to cause the communication device to perform the methods for positioning message transmission described above.

An embodiment of the present application further provides a processor-readable storage medium, where the processor -readable storage medium stores a computer program, and the computer program is used to cause a processor to perform the methods for positioning message transmission described above.

An embodiment of the present application further provides a chip product, where the chip product stores a computer program, and the chip product is used to cause the chip product to perform the methods for positioning message transmission described above.

In the methods and apparatuses for positioning message transmission, devices, and the storage medium provided by the embodiments of the present application, the positioning message is sent to the first access and mobility management function network function through the first network function, where the positioning message includes indication information for indicating the first access and mobility management function network function to send the positioning message to the second network function. Therefore, the first access and mobility management function network function may send the positioning message to the second network function based on the indication information, which enables the first network function and the second network function in different networks to perform positioning message transmission, thereby satisfying cross-network positioning requirements.

### BRIEF DESCRIPTION OF THE DRAWINGS

To clearly illustrate the solutions in the embodiments of the present application, the drawings used in the description of the embodiments are briefly described below. The drawings in the following description are only some embodiments of the present application, and other drawings may be obtained according to these drawings without any creative work for those skilled in the art.
FIG. 1 is a diagram of a distributed autonomous 6^{th} generation (6G) system architecture according to the related art;
FIG. 2 is a first schematic flowchart of a method for positioning message transmission according to an embodiment of the present application;
FIG. 3 is a second schematic flowchart of a method for positioning message transmission according to an embodiment of the present application;
FIG. 4 is a third schematic flowchart of a method for positioning message transmission according to an embodiment of the present application;
FIG. 5 is a fourth schematic flowchart of a method for positioning message transmission according to an embodiment of the present application;
FIG. 6 is a fifth schematic flowchart of a method for positioning message transmission according to an embodiment of the present application;
FIG. 7 is a first flowchart of cross-network positioning according to an embodiment of the present application;
FIG. 8 is a second flowchart of cross-network positioning according to an embodiment of the present application;
FIG. 9 is a third flowchart of cross-network positioning according to an embodiment of the present application;
FIG. 10 is a fourth flowchart of cross-network positioning according to an embodiment of the present application;
FIG. 11 is a fifth flowchart of cross-network positioning according to an embodiment of the present application;
FIG. 12 is a sixth flowchart of cross-network positioning according to an embodiment of the present application;
FIG. 13 is a schematic structural diagram of a first access and mobility management function network function according to an embodiment of the present application;
FIG. 14 is a schematic structural diagram of a second access and mobility management function network function according to an embodiment of the present application;
FIG. 15 is a schematic structural diagram of a first gateway mobile location center according to an embodiment of the present application;
FIG. 16 is a first schematic structural diagram of a user equipment (UE) according to an embodiment of the present application;
FIG. 17 is a second schematic structural diagram of a user equipment (UE) according to an embodiment of the present application;
FIG. 18 is a first schematic structural diagram of an apparatus for positioning message transmission according to an embodiment of the present application;
FIG. 19 is a second schematic structural diagram of an apparatus for positioning message transmission according to an embodiment of the present application;
FIG. 20 is a third schematic structural diagram of an apparatus for positioning message transmission according to an embodiment of the present application;
FIG. 21 is a fourth schematic structural diagram of an apparatus for positioning message transmission according to an embodiment of the present application; and
FIG. 22 is a fifth schematic structural diagram of an apparatus for positioning message transmission according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar to it.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a skilled person in the art based on the embodiments of the present application without any creative effort belong to the scope of the present application.

In order to facilitate a clearer understanding of solutions of each embodiment of the present application, some contents related to each embodiment of the present application are first introduced.

An important trend of a 6^{th} generation (6G) network development is centralized and distributed network architecture. Original network architecture designs of S^{th} generation (5G) and previous generations is centralized control. With development of a network, facing dual driving forces of service scenarios and technology development, a design of the 6G network needs to consider a distributed architecture, of which a control plane will gradually evolve towards a distributed form. With distribution of intelligence, and distributed development of cloud computing, new connections and new networks will also be distributed.

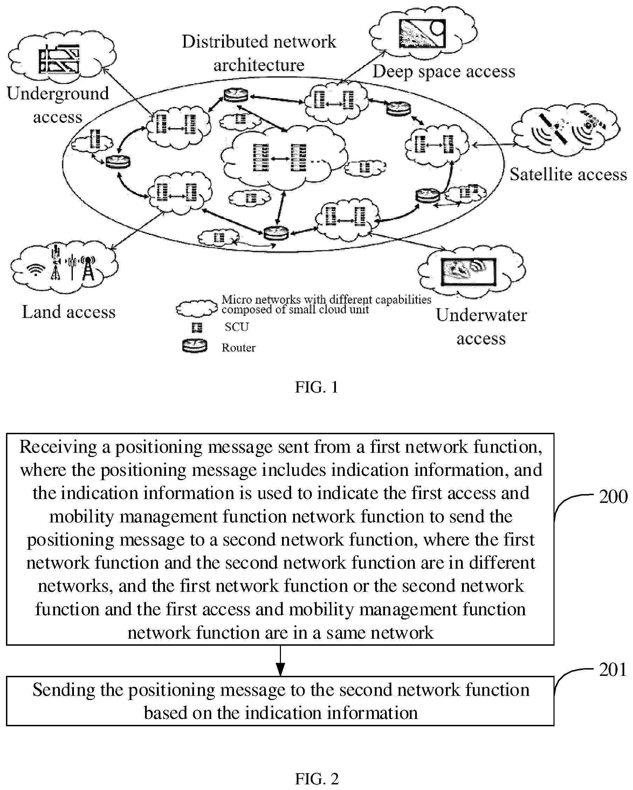

FIG. 1 is a diagram of a distributed autonomous 6th generation (6G) system architecture according to the related art. As shown in FIG. 1, the 6G network will be oriented to diverse scenarios and network performance requirements in the air, space, land, and sea, and the centralized network architecture cannot uniformly satisfy all scenarios. To cope with this challenge, a 6G network architecture needs to go beyond centralized control and gradually evolve to a distributed architecture, extend more network functions to an edge of the network, and build distributed homogeneous small cloud units (SCU) with different functional levels. Each SCU is self-contained and has all the functions of complete control and data forwarding. Multiple SCUs form an autonomous micro network across domains based on service requirements, and provide targeted network services based on specific service scenarios, user scale, geographical environment and other requirements.

For the 6G network architecture or future network architectures, one trend is a network form of large centralization and deep distribution, that is, both centralized network nodes and distributed network nodes must exist in a network, to achieve coexistence of centralized network nodes and distributed network nodes. The 6G network organizes through centralized and distributed coordination and distributed autonomy. On one hand, more network functions are extended to an edge of a network, and on the other hand, core functions facing the global are centralized. Through cloud-network integration and distributed coordination, services having more complexity are supported.

When a location services (LCS) client/an application function (AF)/a network function (NF) needs to initiate a positioning request across a network to obtain location information of a target user equipment (UE), or a target user equipment (UE) needs to actively initiate a positioning request across a network to report location information to the LCS client/AF/NF, and a current network node cannot satisfy the positioning request of the LCS Client/AF/NF or the target UE, it is necessary to coordinate across two or more network nodes to satisfy requirements of the LCS Client/AF/NF or the target UE. Therefore, embodiments of the present application provide methods and apparatuses for positioning message transmission, devices and a storage medium to satisfy positioning requirements across networks.

FIG. 2 is a first schematic flowchart of a method for positioning message transmission according to an embodiment of the present application. As shown in FIG. 2, the method is performed by a first access and mobility management function network function, and includes the following steps.

Step 200: receiving a positioning message sent from a first network function, where the positioning message includes indication information, and the indication information is used to indicate the first access and mobility management function network function to send the positioning message to a second network function, where the first network function and the second network function are in different networks, and the first network function or the second network function is in a same network with the first access and mobility management function network function.

Step 201: sending the positioning message to the second network function based on the indication information.

In any of the embodiments of the present application, the positioning message may refer to any message that needs to be transmitted between different network functions in a UE positioning procedure. For example, the positioning message may include a *ProvidePositioningInfo Request* message, a *ProvidePositioningInfo Response* message, a *Location Update Request* message, a *Location Update Response* message, an *EventNotify* message, etc., and specific circumstances are not limited.

In any of the embodiments of the present application, cross-network positioning message transmission may be achieved through interaction between access and mobility management function (AMF) network functions of different networks. For example, in case that a first network function in network 1 needs to send a positioning message to a second network function in network 2, the first network function may send a positioning message to AMF1 in network 1. AMF1 forwards the positioning message to AMF2 in network 2, and AMF2 receives the positioning message (in case that AMF2 is a second network function) or forwards the positioning message to a second network function. In an embodiment, in case that the first network function is AMF1 in network 1, it can directly send a positioning message to AMF2 in network 2, and AMF2 forwards the positioning message to a second network function.

In any of the embodiments of the present application, the first network function and the second network function are in different networks. In this case, the first access and mobility management function network function is in the same network as the first network function, and is not in the same network as the second network function; or the first access and mobility management function network function is in the same network as the second network function, and is not in the same network as the first network function.

For example, in case that the first network function is gateway mobile location center (GMLC) 1 in network 1, the second network function is AMF2 in network 2, and the first access and mobility management function network function is AMF1 in network 1, the first network function and the first access and mobility management function network function are in the same network, and the second network function and the first access and mobility management function network function are not in the same network. In an embodiment, in case that the first network function is AMF2 in network 2, the second network function is GMLC1 in network 1, and the first access and mobility management function network function is AMF1 in network 1, the first network function and the first access and mobility management function network function are in different networks, and the second network function and the first access and mobility management function network function are in the same network.

In any of the embodiments of the present application, indication information contained in the positioning message may be a "message type" parameter, such as: "message type: an identifier of the second network function", so that the first access and mobility management function network function may send the positioning message to the second network function based on indication of the parameter.

In any of the embodiments of the present application, the network in which the first network function described in the present application is located may be a distributed network or a centralized network, and the network in which the second network function is located may be a distributed network or a centralized network. For example, assuming that the first network function is in the first network, and the second network function is in the second network, the following situations exist: both the first network and the second network are distributed networks; or both the first network and the second network are centralized networks; or the first network is a distributed network and the second network is a centralized network; or the first network is a centralized network and the second network is a distributed network.

In any of the embodiments of the present application, the first access and mobility management function network function and the second access and mobility management function network function interact directly with each other, or interact indirectly through a third network.

In any of the embodiments of the present application, the first access and mobility management function network function is in the first network, and the second access and mobility management function network function is in the second network. The first access and mobility management function network function and the second access and mobility management function network function may interact directly with each other (for example, the first network and the second network are adjacent networks), or may indirectly transmit messages through network nodes of a third network (for example, a centralized network or a distributed network).

In the method for positioning message transmission provided by the embodiment of the present application, the positioning message is sent to the first access and mobility management function network function through the first network function, where the positioning message includes indication information for indicating the first access and mobility management function network function to send the positioning message to the second network function. Therefore, the first access and mobility management function network function may send the positioning message to the second network function based on the indication information, which enables the first network function and the second network function in different networks to perform positioning message transmission, thereby satisfying cross-network positioning requirements.

In any of the embodiments of the present application, receiving the positioning message sent from the first network function includes:
receiving a positioning message sent from a first gateway mobile location center, where the positioning message includes indication information, and the indication information is used to indicate the first access and mobility management function network function to send the positioning message to a second access and mobility management function network function; or
receiving a positioning message sent from a second access and mobility management function network function, where the positioning message includes indication information, and the indication information is used to indicate the first access and mobility management function network function to send the positioning message to a first gateway mobile location center,
where the first gateway mobile location center and the first access and mobility management function network function are network nodes in a first network, and the second access and mobility management function network function is a network node in a second network.

In any of the embodiments of the present application, the first network and the second network are different networks.

The first gateway mobile location center and the first access and mobility management function network function may be network nodes in the first network, and the second access and mobility management function network function may be a network node in the second network. In any of the embodiments of the present application, the first network function may be a first gateway mobile location center located in the first network, and the second network function may be a second access and mobility management function network function located in the second network. The first gateway mobile location center may send the positioning message to the second access and mobility management function network function through the first access and mobility management function network function.

In any of the embodiments of the present application, the positioning message sent from the first gateway mobile location center to the second access and mobility management function network function may be a *ProvidePositioningInfo Request* message, a *LocationUpdate Response* message, etc.

In any of the embodiments of the present application, the indication information contained in the positioning message may be a "message type" parameter, such as: "message type: an identifier of the second access and mobility management function network function", so that the first access and mobility management function network function may send the positioning message to the second access and mobility management function network function based on indication of the parameter.

In any of the embodiments of the present application, the first network function may be a second access and mobility management function network function located in the second network, and the second network function may be a first gateway mobile location center located in the first network. The second access and mobility management function network function may send the positioning message to the first gateway mobile location center through the first access and mobility management function network function.

In any of the embodiments of the present application, the positioning message sent from the second access and mobility management function network function to the first gateway mobile location center may be a *ProvidePositioningInfo Response* message, a *LocationUpdate Request* message, an *EventNotify* message, etc.

In any of the embodiments of the present application, the indication information contained in the positioning message may be a "message type" parameter, such as: "message type: an identifier of the first gateway mobile location center", so that the first access and mobility management function network function may send the positioning message to the first gateway mobile location center based on indication of the parameter.

In any of the embodiments of the present application, receiving the positioning message sent from the first gateway mobile location center includes:
receiving a first request message sent from the first gateway mobile location center, where the first request message is used to request location information of a target user equipment (UE) accessing the second network, the first request message includes first indication information, and the first indication information is used to indicate the first access and mobility management function network function to send the first request message to the second access and mobility management function network function.

In any of the embodiments of the present application, the positioning message sent from the first gateway mobile location center to the first access and mobility management function network function may be a first request message. The first request message is used to request location information of the target UE accessing the second network. In any of the embodiments of the present application, the first request message may be a *ProvidePositioningInfo Request* message.

For example, a location service client or an application function located in the first network needs to obtain the location information of the target UE located in the second network, and the location service client or the application function may send a request to the first gateway mobile location center to request the location information of the target UE. After receiving the request sent from the location service client or the application function, the first gateway mobile location center may send a *ProvidePositioningInfo Request* message to the first access and mobility management function network function, where the request message includes the first indication information, a subscription permanent identifier (SUPI) of the target UE, a client type, a requested quality of service (QoS), and a supported geographic area description (GAD) shape, etc.

In any of the embodiments of the present application, the first indication information contained in the first request message may be a "message type" parameter, such as: "message type: an identifier of the second access and mobility management function network function", so that the first access and mobility management function network function may send the first request message to the second access and mobility management function network function based on indication of the parameter.

In any of the embodiments of the present application, the method further includes:
receiving a first response message sent from the second access and mobility management function network function, where the first response message includes location information of the target UE and second indication information, and the second indication information is used to indicate the first access and mobility management function network function to send the first response message to the first gateway mobile location center.

In any of the embodiments of the present application, the second access and mobility management function network function located in the second network may send a first response message to the first access and mobility management function network function located in the first network, where the first response message is used to return the location information of the target UE accessing the second network. In any of the embodiments of the present application, the first response message may be a *ProvidePositioningInfo Response* message.

For example, after the second access and mobility management function network function receives the location information of the target UE returned by a location management function network function (LMF) after performing a positioning procedure on the target UE, the second access and mobility management function network function may send a *ProvidePositioningInfo Response* message to the first access and mobility management function network function. The response message includes the second indication information, a current location of the target UE, a UE positioning capability, a positioning time and accuracy, information about a positioning method and a timestamp of the location, etc.

In any of the embodiments of the present application, the second indication information contained in the first response message may be a "message type" parameter, such as: "message type: an identifier of the first gateway mobile location center", so that the first access and mobility management function network function may send the first response message to the first gateway mobile location center based on indication of the parameter.

In any of the embodiments of the present application, receiving the positioning message sent from the second access and mobility management function network function includes:
receiving a second request message sent from the second access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center.

In any of the embodiments of the present application, the positioning message sent from the second access and mobility management function network function to the first access and mobility management function network function may be a second request message. The second request message is used to provide the location information of the target UE accessing the second network to the third network function accessing the first network. The third network function includes a location service client, an application function or other network function that needs to obtain the UE location information. In any of the embodiments of the present application, the second request message may be a *LocationUpdate Request* message.

For example, it is necessary to send the location information of the target UE accessing the second network to the third network function accessing the first network. After the second access and mobility management function network function receives the location information of the target UE returned by the location management function network function after performing a positioning procedure on the target UE, the second access and mobility management function network function may send a *LocationUpdate Request* message to the first access and mobility management function network function. The request message includes third indication information, a current location of the target UE, a UE positioning capability, a positioning time and accuracy, information about a positioning method and a timestamp of the location, etc.

In any of the embodiments of the present application, the third indication information contained in the second request message may be a "message type" parameter, such as: "message type: an identifier of the first gateway mobile location center", so that the first access and mobility management function network function may send the second request message to the first gateway mobile location center based on indication of the parameter.

After receiving the second request message, the first gateway mobile location center may send the location information of the target UE to the third network function.

In any of the embodiments of the present application, the method further includes:
receiving a second response message sent from the first gateway mobile location center, where the second response message is used to indicate whether the third network function successfully handles the location information of the target UE, the second response message includes fourth indication information, and the fourth indication information is used to indicate the first access and mobility management function network function to send the second response message to the second access and mobility management function network function.

In any of the embodiments of the present application, after the third network function accessing the first network receives the location information of the target UE accessing the second network, the first gateway mobile location center may send the second response message to the first access and mobility management function network function. The second response message is used to indicate whether the third network function successfully handles the location information of the target UE. In any of the embodiments of the present application, the second response message may be a *LocationUpdate Response* message.

For example, after the third network function accessing the first network receives the location information of the target UE accessing the second network, the third network function may process the location information of the target UE and return a location information acknowledgement message to the first gateway mobile location center. After the first gateway mobile location center receives the location information acknowledgement message returned by the third network function, the first gateway mobile location center may send a *LocationUpdate Response* message to the first access and mobility management function network function. The response message includes a *LocationUpdateNotify Response* message and fourth indication information. The *LocationUpdateNotify Response* message carries the location information acknowledgement message. If the third network function successfully handles the location information of the target UE, the location information acknowledgement message indicates that the location information of the target UE has been successfully handled. Otherwise, the location information acknowledgement message carries an error cause. In any of the embodiments of the present application, the fourth indication information contained in the second response message may be a "message type" parameter, such as: "message type: an identifier of the second access and mobility management function network function", so that the first access and mobility management function network function may send the second response message to the second access and mobility management function network function based on indication of the parameter.

In any of the embodiments of the present application, before receiving the first response message sent from the second access and mobility management function network function, or before receiving the second request message sent from the second access and mobility management function network function, the method further includes:
receiving a third request message sent from the second access and mobility management function network function, where the third request message is used to request the location information of the target UE, the third request message includes fifth indication information, and the fifth indication information is used to indicate the first access and mobility management function network function to send the third request message to a first location management function network function in the first network; and
receiving a third response message sent from the first location management function network function, where the third response message includes the location information of the target UE and sixth indication information, and the sixth indication information is used to indicate the first access and mobility management function network function to send the third response message to the second access and mobility management function network function.

In any of the embodiments of the present application, the first access and mobility management function network function may receive a third request message sent from the second access and mobility management function network function. The third request message is used to request the location information of the target UE accessing the second network. In any of the embodiments of the present application, the third request message may be a *DetermineLocation Request* message. For example, the second access and mobility management function network function located in the second network requires the first location management function network function located in the first network to perform a positioning procedure on the target UE accessing the second network, thereby obtaining the location information of the target UE. At this time, the second access and mobility management function network function may send a *DetermineLocation Request* message to the first access and mobility management function network function, where the request message includes the fifth indication information, a location service association identifier, a serving cell identifier of a primary cell of a primary radio access network (RAN) node and a serving cell identifier of a primary cell of a secondary RAN node in a dual connection scenario (if available), a client type, an indication that the UE supports long term evolution positioning protocol (LPP), a requested QoS, a UE positioning capability (if available) and a supported GAD shape, etc.

In any of the embodiments of the present application, the fifth indication information contained in the third request message may be a "message type" parameter, such as: "message type: an identifier of the first location management function network function", so that the first access and mobility management function network function may send the third request message to the first location management function network function based on indication of the parameter.

After receiving the third request message, the first location management function network function may perform a positioning procedure on the target UE.

Correspondingly, the third response message is used to provide the location information of the target UE. In any of the embodiments of the present application, the third response message may be a *DetermineLocation Response* message.

For example, after the first location management function network function located in the first network completes the positioning procedure of the target UE accessing the second network, the location information of the target UE is obtained. The location information of the target UE may include a current location of the target UE, a UE positioning capability, a positioning time and accuracy, information about a positioning method and a timestamp of the location, etc. The first location management function network function may then send a location response message to the first access and mobility management function network function, where the response message includes the sixth indication information, a current location of the target UE, a UE positioning capability, a positioning time and accuracy, information about a positioning method and a timestamp of the location, etc.

In any of the embodiments of the present application, the sixth indication information contained in the third response message may be a "message type" parameter, such as: "message type: an identifier of the second access and mobility management function network function", so that the first access and mobility management function network function may send the third response message to the second access and mobility management function network function based on indication of the parameter. In any of the embodiments of the present application, before receiving the third request message sent from the second access and mobility management function network function, the method further includes:
receiving a fourth request message sent from the second access and mobility management function network function, where the fourth request message is used to request the first access and mobility management function network function to select a first location management function network function for providing a positioning service for the target UE; and
sending information of the first location management function network function to the second access and mobility management function network function based on the fourth request message.

In any of the embodiments of the present application, before the first access and mobility management function network function receives the third request message sent from the second access and mobility management function network function, in case that there is no suitable location management function network function in the second network, the second access and mobility management function network function may send the fourth request message to the first access and mobility management function network function, where the fourth request message is used to request the first access and mobility management function network function to select the first location management function network function for providing a positioning service for the target UE.

The first access and mobility management function network function may then select the first location management function network function for the second access and mobility management function network function based on relevant available information or based on a local configuration of the first access and mobility management function network function. In any of the embodiments of the present application, a procedure of the first access and mobility management function network function selecting a suitable location management function network function may consider a base station of the target UE.

After selecting the first location management function network function, the first access and mobility management function network function may send the information of the first location management function network function to the second access and mobility management function network function based on the fourth request message, so that the second access and mobility management function network function may send the third request message to the first access and mobility management function network function, to request the first location management function network function to perform a positioning procedure on the target UE.

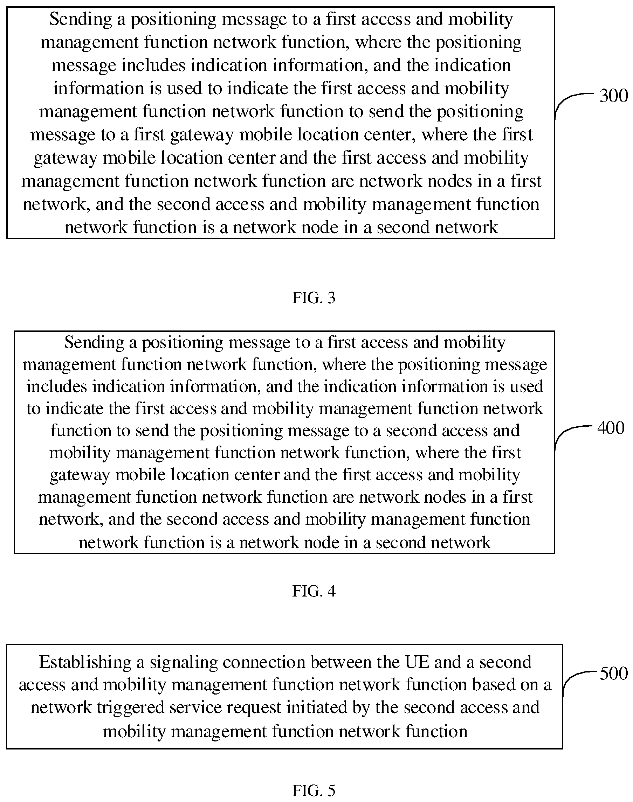

FIG. 3 is a second schematic flowchart of a method for positioning message transmission according to an embodiment of the present application. As shown in FIG. 3, the method is performed by a second access and mobility management function network function, and includes the following steps.

Step 300: sending a positioning message to a first access and mobility management function network function, where the positioning message includes indication information, and the indication information is used to indicate the first access and mobility management function network function to send the positioning message to a first gateway mobile location center,
where the first gateway mobile location center and the first access and mobility management function network function are network nodes in a first network, and the second access and mobility management function network function is a network node in a second network.

In any of the embodiments of the present application, the first network and the second network are different networks.

The first gateway mobile location center and the first access and mobility management function network function may be network nodes in the first network, and the second access and mobility management function network function may be a network node in the second network.

The second access and mobility management function network function may send the positioning message to the first gateway mobile location center through the first access and mobility management function network function.

In any of the embodiments of the present application, the positioning message sent from the second access and mobility management function network function to the first gateway mobile location center may be a *ProvidePositioningInfo Response* message, a *LocationUpdate Request* message, an *EventNotify* message, etc.

In any of the embodiments of the present application, the indication information contained in the positioning message may be a parameter indicating a message type of the first gateway mobile location center, so that the first access and mobility management function network function may send the positioning message to the first gateway mobile location center based on indication of the parameter.

In the method for positioning message transmission provided by the embodiment of the present application, the positioning message is sent to the first access and mobility management function network function through the second access and mobility management function network function, where the positioning message includes indication information for indicating the first access and mobility management function network function to send the positioning message to the first gateway mobile location center. Therefore, the first access and mobility management function network function may send the positioning message to the first gateway mobile location center based on the indication information, which enables the second access and mobility management function network function in the second network and the first gateway mobile location center in the first network to perform positioning message transmission, thereby satisfying cross-network positioning requirements.

In any of the embodiments of the present application, sending the positioning message to the first access and mobility management function network function includes:
receiving a first request message sent, through the first access and mobility management function network function, from a first gateway mobile location center, where the first request message is used to request location information of a target user equipment (UE) accessing the second network, the first request message includes first indication information, and the first indication information is used to indicate the first access and mobility management function network function to send the first request message to the second access and mobility management function network function; and
sending a first response message to the first access and mobility management function network function based on the first request message, where the first response message includes location information of the target UE and second indication information, and the second indication information is used to indicate the first access and mobility management function network function to send the first response message to the first gateway mobile location center.

In any of the embodiments of the present application, the positioning message sent from the first gateway mobile location center to the second access and mobility management function network function through the first access and mobility management function network function may be a first request message. The first request message is used to request location information of the target UE accessing the second network. In any of the embodiments of the present application, the first request message may be a *ProvidePositioningInfo Request* message.

For example, a location service client or an application function located in the first network needs to obtain the location information of the target UE located in the second network, and the location service client or the application function may send a request to the first gateway mobile location center to request the location information of the target UE. After receiving the request sent from the location service client or the application function, the first gateway mobile location center may send a *ProvidePositioningInfo Request* message to the first access and mobility management function network function, where the request message includes the first indication information, a SUPI of the target UE, a client type, a requested QoS, and a supported GAD shape, etc.

In any of the embodiments of the present application, the first indication information contained in the first request message may be a "message type" parameter, such as: "message type: an identifier of the second access and mobility management function network function", so that the first access and mobility management function network function may send the first request message to the second access and mobility management function network function based on indication of the parameter.

The second access and mobility management function network function may send a first response message to the first access and mobility management function network function. The first response message is used to return the location information of the target UE accessing the second network. In any of the embodiments of the present application, the first response message may be *a ProvidePositioningInfo Response* message.

For example, after the second access and mobility management function network function receives the location information of the target UE returned by a location management function network function after performing a positioning procedure on the target UE, the second access and mobility management function network function may send a *ProvidePositioningInfo Response* message to the first access and mobility management function network function. The response message includes the second indication information, a current location of the target UE, a UE positioning capability, a positioning time and accuracy, information about a positioning method and a timestamp of the location, etc.

In any of the embodiments of the present application, the second indication information contained in the first response message may be a "message type" parameter, such as: "message type: an identifier of the first gateway mobile location center", so that the first access and mobility management function network function may send the first response message to the first gateway mobile location center based on indication of the parameter. In any of the embodiments of the present application, sending the positioning message to the first access and mobility management function network function includes:
sending a second request message to the first access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center.

In any of the embodiments of the present application, the positioning message sent from the second access and mobility management function network function to the first access and mobility management function network function may be a second request message. The second request message is used to provide the location information of the target UE accessing the second network to the third network function accessing the first network. The third network function includes a location service client, an application function or other network function that needs to obtain the UE location information. In any of the embodiments of the present application, the second request message may be a *LocationUpdate Request* message.

For example, it is necessary to send the location information of the target UE accessing the second network to the third network function accessing the first network. After the second access and mobility management function network function receives the location information of the target UE returned by the location management function network function after performing a positioning procedure on the target UE, the second access and mobility management function network function may send a *LocationUpdate Request* message to the first access and mobility management function network function. The request message includes third indication information, a current location of the target UE, a UE positioning capability, a positioning time and accuracy, information about a positioning method and a timestamp of the location, etc.

In any of the embodiments of the present application, the third indication information contained in the second request message may be a "message type" parameter, such as: "message type: an identifier of the first gateway mobile location center", so that the first access and mobility management function network function may send the second request message to the first gateway mobile location center based on indication of the parameter.

After receiving the second request message, the first gateway mobile location center may send the location information of the target UE to the third network function.

After the third network function receives the location information of the target UE, the first gateway mobile location center may send a second response message to the second access and mobility management function network function through the first access and mobility management function network function. The second response message is used to indicate whether the third network function successfully handles the location information of the target UE. In any of the embodiments of the present application, the second response message may be a *LocationUpdate*

### Response message.

For example, after the third network function accessing the first network receives the location information of the target UE accessing the second network, the third network function may process the location information of the target UE and return a location information acknowledgement message to the first gateway mobile location center. After the first gateway mobile location center receives the location information acknowledgement message returned by the third network function, the first gateway mobile location center may send a *LocationUpdate Response* message to the first access and mobility management function network function. The response message includes a *LocationUpdateNotify Response* message and fourth indication information. The *LocationUpdateNotify Response* message carries the location information acknowledgement message. If the third network function successfully handles the location information of the target UE, the location information acknowledgement message indicates that the location information of the target UE has been successfully handled. Otherwise, the location information acknowledgement message carries an error cause.

In any of the embodiments of the present application, the fourth indication information contained in the second response message may be a "message type" parameter, such as: "message type: an identifier of the second access and mobility management function network function", so that the first access and mobility management function network function may send the second response message to the second access and mobility management function network function based on indication of the parameter.

In any of the embodiments of the present application, before sending the positioning message to the first access and mobility management function network function, the method further includes:
sending a third request message to the first access and mobility management function network function, where the third request message is used to request the location information of the target UE, the third request message includes fifth indication information, and the fifth indication information is used to indicate the first access and mobility management function network function to send the third request message to a first location management function network function in the first network; and
receiving a third response message sent, through the first access and mobility management function network function, from the first location management function network function, where the third response message includes the location information of the target UE and sixth indication information, and the sixth indication information is used to indicate the first access and mobility management function network function to send the third response message to the second access and mobility management function network function.

In any of the embodiments of the present application, before sending a positioning message to the first access and mobility management function network function, the second access and mobility management function network function may send a third request message to the first access and mobility management function network function. The third request message is used to request the location information of the target UE accessing the second network. In any of the embodiments of the present application, the third request message may be a *DetermineLocation Request* message.

For example, the second access and mobility management function network function located in the second network requires the first location management function network function located in the first network to perform a positioning procedure on the target UE accessing the second network, thereby obtaining the location information of the target UE. At this time, the second access and mobility management function network function may send a *DetermineLocation Request* message to the first access and mobility management function network function, where the request message includes the fifth indication information, a location service association identifier, a serving cell identifier of a primary cell of a primary RAN node and a serving cell identifier of a primary cell of a secondary RAN node in a dual connection scenario (if available), a client type, an indication that the UE supports LPP, a requested QoS, a UE positioning capability (if available) and a supported GAD shape, etc.

After receiving the third request message, the first location management function network function may perform a positioning procedure on the target UE.

In any of the embodiments of the present application, the fifth indication information contained in the third request message may be a "message type" parameter, such as: "message type: an identifier of the first location management function network function", so that the first access and mobility management function network function may send the third request message to the first location management function network function based on indication of the parameter.

Correspondingly, the third response message is used to provide the location information of the target UE. In any of the embodiments of the present application, the third response message may be a *DetermineLocation response* message.

For example, after the first location management function network function located in the first network completes the positioning procedure of the target UE accessing the second network, the location information of the target UE is obtained. The location information of the target UE may include a current location of the target UE, a UE positioning capability, a positioning time and accuracy, information about a positioning method and a timestamp of the location, etc. The first location management function network function may then send a location response message to the first access and mobility management function network function, where the response message includes the sixth indication information, a current location of the target UE, a UE positioning capability, a positioning time and accuracy, information about a positioning method and a timestamp of the location, etc.

In any of the embodiments of the present application, the sixth indication information contained in the third response message may be a "message type" parameter, such as: "message type: an identifier of the second access and mobility management function network function", so that the first access and mobility management function network function may send the third response message to the second access and mobility management function network function based on indication of the parameter.

In any of the embodiments of the present application, before sending the third request message to the first access and mobility management function network function, the method further includes:
sending a fourth request message to the first access and mobility management function network function, where the fourth request message is used to request the first access and mobility management function network function to select a first location management function network function for providing a positioning service for the target UE; and
receiving information of the first location management function network function sent from the first access and mobility management function network function.

In any of the embodiments of the present application, before the second access and mobility management function network function sends the third request message to the first access and mobility management function network function, in case that there is no suitable location management function network function in the second network, the second access and mobility management function network function may send the fourth request message to the first access and mobility management function network function, where the fourth request message is used to request the first access and mobility management function network function to select the first location management function network function for providing a positioning service for the target UE.

The first access and mobility management function network function may then select the first location management function network function for the second access and mobility management function network function based on relevant available information or based on a local configuration of the first access and mobility management function network function.

In any of the embodiments of the present application, a procedure of the first access and mobility management function network function selecting a suitable location management function network function may consider a base station of the target UE.

After selecting the first location management function network function, the first access and mobility management function network function may send the information of the first location management function network function to the second access and mobility management function network function based on the fourth request message, so that the second access and mobility management function network function may send the third request message to the first access and mobility management function network function, to request the first location management function network function to perform a positioning procedure on the target UE.

FIG. 4 is a third schematic flowchart of a method for positioning message transmission according to an embodiment of the present application. As shown in FIG. 4, the method is performed by a first gateway mobile location center, and includes the following steps.

Step 400: sending a positioning message to a first access and mobility management function network function, where the positioning message includes indication information, and the indication information is used to indicate the first access and mobility management function network function to send the positioning message to a second access and mobility management function network function,
where the first gateway mobile location center and the first access and mobility management function network function are network nodes in a first network, and the second access and mobility management function network function is a network node in a second network.

In any of the embodiments of the present application, the first network and the second network are different networks.

The first gateway mobile location center and the first access and mobility management function network function may be network nodes in the first network, and the second access and mobility management function network function may be a network node in the second network.

The first gateway mobile location center may send the positioning message to the second access and mobility management function network function through the first access and mobility management function network function.

In any of the embodiments of the present application, the positioning message sent from the first gateway mobile location center to the second access and mobility management function network function may be a *ProvidePositioningInfo Request* message, a *LocationUpdate Response* message, etc.

In any of the embodiments of the present application, the indication information contained in the positioning message may be a "message type" parameter, such as: "message type: an identifier of the second access and mobility management function network function", so that the first access and mobility management function network function may send the positioning message to the second access and mobility management function network function based on indication of the parameter.

In the method for positioning message transmission provided by the embodiment of the present application, the positioning message is sent to the first access and mobility management function network function through the first gateway mobile location center, where the positioning message includes indication information for indicating the first access and mobility management function network function to send the positioning message to the second access and mobility management function network function. Therefore, the first access and mobility management function network function may send the positioning message to the second access and mobility management function network function based on the indication information, which enables the first gateway mobile location center in the first network and the second access and mobility management function network function in the second network to perform positioning message transmission, thereby satisfying cross-network positioning requirements.

In any of the embodiments of the present application, sending the positioning message to the first access and mobility management function network function includes:
sending a first request message to the first access and mobility management function network function, where the first request message is used to request location information of a target user equipment (UE) accessing the second network, the first request message includes first indication information, and the first indication information is used to indicate the first access and mobility management function network function to send the first request message to the second access and mobility management function network function.

In any of the embodiments of the present application, the positioning message sent from the first gateway mobile location center to the first access and mobility management function network function may be a first request message. The first request message is used to request location information of the target UE accessing the second network. In any of the embodiments of the present application, the first request message may be a *ProvidePositioningInfo Request* message.

For example, a location service client or an application function located in the first network needs to obtain the location information of the target UE located in the second network, and the location service client or the application function may send a request to the first gateway mobile location center to request the location information of the target UE. After receiving the request sent from the location service client or the application function, the first gateway mobile location center may send a *ProvidePositioningInfo Request* message to the first access and mobility management function network function, where the request message includes the first indication information, a SUPI of the target UE, a client type, a requested QoS, and a supported GAD shape, etc.

In any of the embodiments of the present application, the first indication information contained in the first request message may be a "message type" parameter, such as: "message type: an identifier of the second access and mobility management function network function", so that the first access and mobility management function network function may send the first request message to the second access and mobility management function network function based on indication of the parameter.

The second access and mobility management function network function may send a first response message to the first gateway mobile location center through the first access and mobility management function network function. The first response message is used to return the location information of the target UE accessing the second network. In any of the embodiments of the present application, the first response message may be a *ProvidePositioningInfo Response* message.

For example, after the second access and mobility management function network function receives the location information of the target UE returned by a location management function network function after performing a positioning procedure on the target UE, the second access and mobility management function network function may send a *ProvidePositioningInfo Response* message to the first access and mobility management function network function. The response message includes the second indication information, a current location of the target UE, a UE positioning capability, a positioning time and accuracy, information about a positioning method and a timestamp of the location, etc.

In any of the embodiments of the present application, the second indication information contained in the first response message may be a "message type" parameter, such as: "message type: an identifier of the first gateway mobile location center", so that the first access and mobility management function network function may send the first response message to the first gateway mobile location center based on indication of the parameter.

In any of the embodiments of the present application, sending the positioning message to the first access and mobility management function network function includes:
receiving a second request message sent, through the first access and mobility management function network function, from the second access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center; and
sending a second response message to the first access and mobility management function network function based on the second request message, where the second response message is used to indicate whether the third network function successfully handles the location information of the target UE, the second response message includes fourth indication information, and the fourth indication information is used to indicate the first access and mobility management function network function to send the second response message to the second access and mobility management function network function.

In any of the embodiments of the present application, the positioning message sent from the second access and mobility management function network function to the first gateway mobile location center through the first access and mobility management function network function may be a second request message. The second request message is used to provide the location information of the target UE accessing the second network to the third network function accessing the first network. The third network function includes a location service client, an application function or other network function that needs to obtain the UE location information. In any of the embodiments of the present application, the second request message may be a *LocationUpdate Request* message.

For example, it is necessary to send the location information of the target UE accessing the second network to the third network function accessing the first network. After the second access and mobility management function network function receives the location information of the target UE returned by the location management function network function after performing a positioning procedure on the target UE, the second access and mobility management function network function may send a *LocationUpdate Request* message to the first access and mobility management function network function. The request message includes third indication information, a current location of the target UE, a UE positioning capability, a positioning time and accuracy, information about a positioning method and a timestamp of the location, etc.

In any of the embodiments of the present application, the third indication information contained in the second request message may be a "message type" parameter, such as: "message type: an identifier of the first gateway mobile location center", so that the first access and mobility management function network function may send the second request message to the first gateway mobile location center based on indication of the parameter. After receiving the second request message, the first gateway mobile location center may send the location information of the target UE to the third network function.

After the third network function receives the location information of the target UE, the first gateway mobile location center may send a second response message to the second access and mobility management function network function through the first access and mobility management function network function. The second response message is used to indicate whether the third network function successfully handles the location information of the target UE. In any of the embodiments of the present application, the second response message may be a *LocationUpdate Response* message.

For example, after the third network function accessing the first network receives the location information of the target UE accessing the second network, the third network function may process the location information of the target UE and return a location information acknowledgement message to the first gateway mobile location center. After the first gateway mobile location center receives the location information acknowledgement message returned by the third network function, the first gateway mobile location center may send a *LocationUpdate Response* message to the first access and mobility management function network function. The response message includes a *LocationUpdateNotify Response* message and fourth indication information. The *LocationUpdateNotify Response* message carries the location information acknowledgement message. If the third network function successfully handles the location information of the target UE, the location information acknowledgement message indicates that the location information of the target UE has been successfully handled. Otherwise, the location information acknowledgement message carries an error cause.

In any of the embodiments of the present application, the fourth indication information contained in the second response message may be a "message type" parameter, such as: "message type: an identifier of the second access and mobility management function network function", so that the first access and mobility management function network function may send the second response message to the second access and mobility management function network function based on indication of the parameter.

FIG. 5 is a fourth schematic flowchart of a method for positioning message transmission according to an embodiment of the present application. As shown in FIG. 5, the method is performed by a user equipment (UE), and includes the following steps.

Step 500: establishing a signaling connection between the UE and a second access and mobility management function network function based on a network triggered service request initiated by the second access and mobility management function network function.

The network triggered service request is initiated by the second access and mobility management function network function based on a received first request message, where the first request message is sent from a first gateway mobile location center to the second access and mobility management function network function through a first access and mobility management function network function, the first request message is used to request location information of the UE, the first request message includes first indication information, and the first indication information is used to indicate the first access and mobility management function network function to send the first request message to the second access and mobility management function network function.

The first gateway mobile location center and the first access and mobility management function network function are network nodes in a first network, the second access and mobility management function network function is a network node in a second network, and the UE accesses the second network.

In any of the embodiments of the present application, the first gateway mobile location center and the first access and mobility management function network function are network nodes in the first network, the second access and mobility management function network function is a network node in the second network, and the UE accesses the second network.

The first gateway mobile location center may send a first request message to the second access and mobility management function network function through the first access and mobility management function network function. The first request message is used to request location information of the UE accessing the second network. In any of the embodiments of the present application, the first request message may be a *ProvidePositioningInfo Request* message.

For example, a location service client or an application function located in the first network needs to obtain location information of a UE located in the second network, and the location service client or the application function may send a request to the first gateway mobile location center, to request the location information of the UE. After receiving the request sent from the location service client or the application function, the first gateway mobile location center may send a *ProvidePositioningInfo Request* message to the first access and mobility management function network function, where the request message includes the first indication information, a SUPI of the UE, a client type, a requested QoS, and a supported GAD shape, etc.

In any of the embodiments of the present application, the first indication information contained in the first request message may be a "message type" parameter, such as: "message type: an identifier of the second access and mobility management function network function", so that the first access and mobility management function network function may send the first request message to the second access and mobility management function network function based on indication of the parameter.

After receiving the first request message, the second access and mobility management function network function may initiate a network triggered service request to the UE based on the first request message, so that the UE may establish a signaling connection between the UE and the second access and mobility management function network function based on the service request. After the signaling connection is established between the UE and the second access and mobility management function network function, the second access and mobility management function network function may trigger a positioning procedure for the UE.

In the method for positioning message transmission provided by the embodiment of the present application, the first request message is sent to the second access and mobility management function network function through the first gateway mobile location center via the first access and mobility management function network function. The second access and mobility management function network function may initiate the network triggered service request to the UE based on the first request message, thereby establishing the signaling connection between the UE and the second access and mobility management function network function. The first gateway mobile location center may then know a location of the UE, thereby satisfying cross-network positioning requirements.

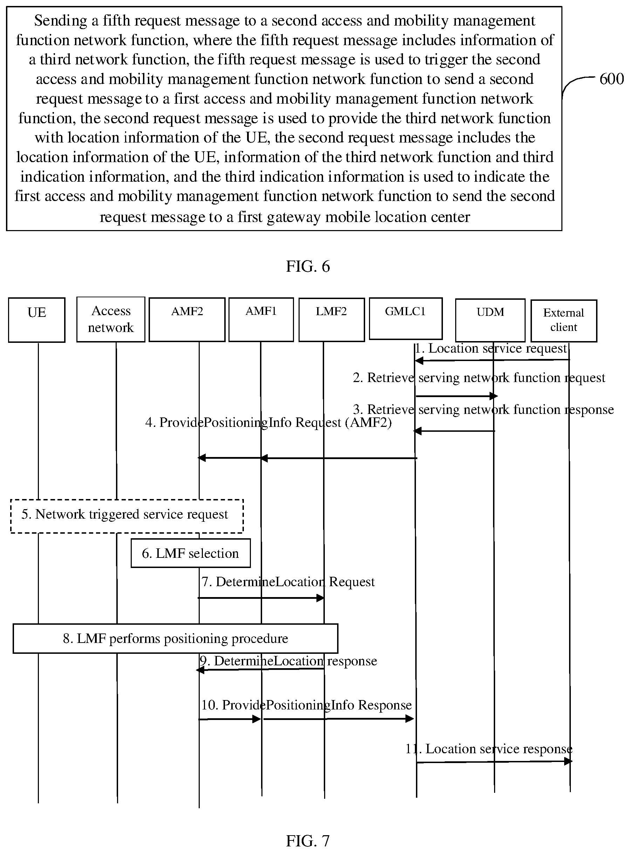

FIG. 6 is a fifth schematic flowchart of a method for positioning message transmission according to an embodiment of the present application. As shown in FIG. 6, the method is performed by a user equipment (UE), and includes the following steps.

Step 600: sending a fifth request message to a second access and mobility management function network function, where the fifth request message includes information of a third network function, the fifth request message is used to trigger the second access and mobility management function network function to send a second request message to a first access and mobility management function network function, the second request message is used to provide the third network function with location information of the UE, the second request message includes the location information of the UE, information of the third network function and third indication information, and the third indication information is used to indicate the first access and mobility management function network function to send the second request message to a first gateway mobile location center.

The first gateway mobile location center and the first access and mobility management function network function are network nodes in a first network, the second access and mobility management function network function is a network node in a second network, the UE accesses the second network, and the third network function accesses the first network.

In any of the embodiments of the present application, the first gateway mobile location center and the first access and mobility management function network function are network nodes in the first network, the second access and mobility management function network function is a network node in the second network, the UE accesses the second network, and the third network function accesses the first network.

The UE accessing the second network may send a fifth request message to the second access and mobility management function network function. The fifth request message contains information of the third network function, which may be used to trigger the second access and mobility management function network function to send a second request message to the first access and mobility management function network function. The second request message is used to provide the location information of the UE to the third network function accessing the first network. The third network function includes a location service client, an application function or other network function that needs to obtain the location information of the UE.

In any of the embodiments of the present application, the fifth request message may be a mobile originated location request (MO-LR) message initiated by the UE.

For example, a user equipment (UE) accessing the second network needs to send its own location information to a third network function accessing the first network, and the UE may send a MO-LR message to the second access and mobility management function network function. The MO-LR message includes information of the third network function (e.g., identification information of the third network function). After the second access and mobility management function network function receives the fifth request message sent from the UE, the second access and mobility management function network function may request the location management function network function to perform a positioning procedure on the UE, and then send a second request message to the first access and mobility management function network function.

In any of the embodiments of the present application, the second request message may be a *LocationUpdate Request* message.

For example, it is necessary to send the location information of the UE accessing the second network to the third network function accessing the first network. After the second access and mobility management function network function receives the location information of the UE returned by the location management function network function after performing a positioning procedure on the UE, the second access and mobility management function network function may send a *LocationUpdate Request* message to the first access and mobility management function network function. The request message includes third indication information, a current location of the UE, a UE positioning capability, a positioning time and accuracy, information about a positioning method and a timestamp of the location, etc.

In any of the embodiments of the present application, the third indication information contained in the second request message may be a "message type" parameter, such as: "message type: an identifier of the first gateway mobile location center", so that the first access and mobility management function network function may send the second request message to the first gateway mobile location center based on indication of the parameter.

After receiving the second request message, the first gateway mobile location center may send the location information of the UE to the third network function.

In the method for positioning message transmission provided by the embodiment of the present application, the fifth request message is sent to the second access and mobility management function network function through the UE, and the second access and mobility management function network function is triggered to send the second request message to the first gateway mobile location center through the first access and mobility management function network function, to provide the location of the UE information to the third network function, thereby satisfying cross-network positioning requirements.

The methods provided by the various embodiments of the present application are based on the same application concept, and implementation of each method may be referred to each other, and repetitions will not be repeated.

The methods provided by the above embodiments of the present application are illustrated below by using embodiments of specific application scenarios.

Embodiment 1: Mobile terminated location request, a location management function is within network 2.

FIG. 7 is a first flowchart of cross-network positioning according to an embodiment of the present application. As shown in FIG. 7, a location service client of network 1 wants to retrieve location information of a target user equipment (UE) accessing network 2, and the location management function is located in network 2. At this time, cooperation of nodes in the two networks is required to obtain information of the UE.

Step 1: an external location service client sends a request to gateway mobile location center 1, to request a location of the target UE identified by a generic public subscription identifier (GPSI) or a SUPI. The request may further include a requested QoS and a supported GAD shape. In case that locations of multiple UEs are requested, the following steps need to be repeated. At this time, gateway mobile location center 1 needs to confirm whether a quantity of target UEs in a location service request exceeds a maximum quantity of target UEs that the client can request. In case that it exceeds, gateway mobile location center 1 rejects the location service request, skips step 2 to step 10, and returns a suitable error cause to the client in step 11.

Step 2: gateway mobile location center 1 invokes a network function service operation to retrieve a service towards a unified data management function of network 1 based on a GPSI or a SUPI of the target UE.

Step 3: the unified data management function returns a network address of a current serving access and mobility management function 2 for a target UE.

Step 4: gateway mobile location center 1 sends a *ProvidePositioningInfo Request* message to access and mobility management function 2, to request a current location of the target UE, where the request message is transparently transmitted from access and mobility management function 1. The service operation includes a SUPI, a client type, a message type: access and mobility management function 2, and may further include a requested QoS and a supported GAD shape. Access and mobility management function 1 transparently transmits the message to access and mobility management function 2 of a network where the target UE is located based on indication of the message type.

Step 5: in case that the target UE is in a connection management idle (CM-IDLE) state, access and mobility management function 1 initiates a network triggered service request procedure to establish a signaling connection with the target UE. The network triggered service request procedure is as defined in clause 4.2.3.3 of 23.502.

Step 6: access and mobility management function 2 selects location management function 2 based on relevant available information or based on a local configuration in access and mobility management function 2. A current serving base station (5G access node (5G-AN)) for the UE is also considered in a selection procedure. A network storage function may be used during the selection procedure.

Step 7: access and mobility management function 2 sends a *DetermineLocation Request* message to location management function 2 to request the current location of the UE. The request message includes a location service association identifier, a serving cell identifier of a primary cell of a primary RAN node and a serving cell identifier of a primary cell of a secondary RAN node in a dual connection scenario (if available), and a client type, and may further includes an indication that the UE supports LPP, a requested QoS, a UE positioning capability (if available) and a supported GAD shape, etc.

Step 8: location management function 2 performs a positioning procedure as described in 6.11 of 23273.

Step 9: location management function 2 returns a *DetermineLocation response* message towards access and mobility management function 2, and returns the current location of the UE and a UE positioning capability (in case that the UE positioning capability received by location management function 2 in step 8 includes an indication that the capability is non-variable, and location management function 2 does not receive the UE positioning capability from access and mobility management function 1 in step 7). The service operation includes a location service association identifier, location information, a positioning time and accuracy, and may further include information about a positioning method and a timestamp of the location, etc.

Step 10: access and mobility management function 2 sends a *ProvidePositioningInfo Response* message to access and mobility management function 1, where the message carries a parameter, that is, message type: gateway mobile location center 1. Access and mobility management function 1 sends a *ProvidePositioningInfo Response* message to gateway mobile location center 1 based on an indication to return the current location of the UE. The response message includes location information, a positioning time and accuracy, and may further include information about a positioning method and a timestamp of a location. In case that the location management function receives a UE positioning capability, the location management function stores the UE positioning capability in UE context.

Step 11: the gateway mobile location center returns a location service response to an external location service client.

Embodiment 2: Mobile terminated location request, a location management function is within network 1.

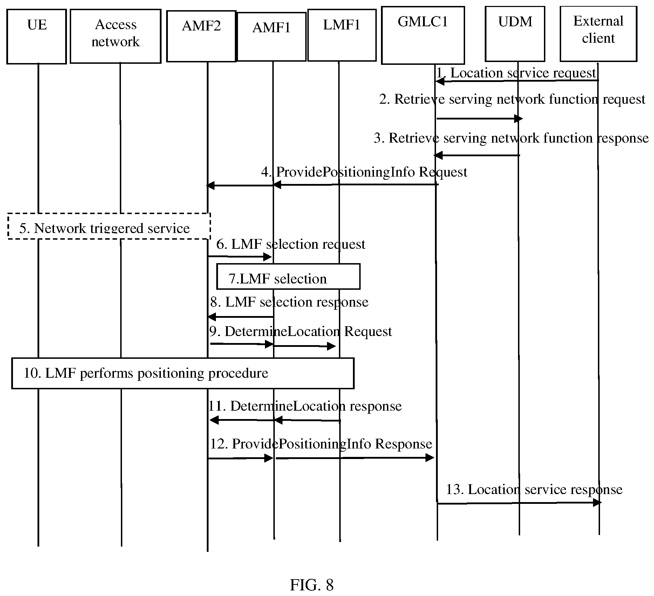

FIG. 8 is a second flowchart of cross-network positioning according to an embodiment of the present application. As shown in FIG. 8, a location service client of network 1 wants to retrieve location information of a target user equipment (UE) accessing network 2, and the location management function is located in network 1. At this time, cooperation of nodes in the two networks is required to obtain information of the UE.

Step 1 to step 5: same as step 1 to step 5 in embodiment 1.

Step 6: since access and mobility management function 2 does not select a suitable location management function in the network 2, access and mobility management function 2 sends a location management function selection request to access and mobility management function 1, to make access and mobility management function 1 select location management function 1 capable of serving.

Step 7: access and mobility management function 1 selects location management function 1 based on relevant available information or based on a local configuration in access and mobility management function 1. A current serving 5G-AN for the UE is also considered in a selection procedure. A network storage function may be used during the selection procedure.

Step 8: after selecting location management function 1 capable of serving, access and mobility management function 1 sends a selection response to access and mobility management function 2.

Step 9: the specific procedure is the same as step 7 in embodiment 1, except that a relevant message needs to be transparently transmitted from access and mobility management function 1 to location management function 1.

Step 10: the specific procedure is the same as step 8 in embodiment 1, except that a relevant message needs to be transparently transmitted from access and mobility management function 1 to location management function 1.

Step 11: the specific procedure is the same as step 9 in embodiment 1, except that a relevant message needs to be transparently transmitted from access and mobility management function 1 to access and mobility management function 2.

Step 12 to step 13: same as step 10 to step 11 in embodiment 1.

Embodiment 3: a UE initiates a positioning request, and a location management function is within network 1.

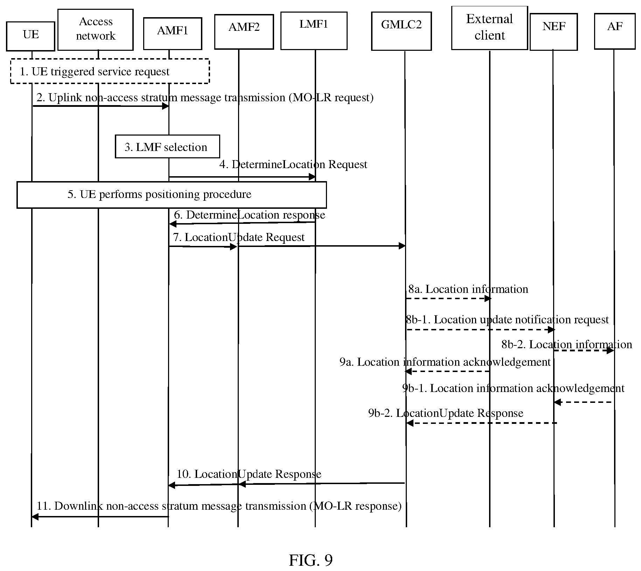

FIG. 9 is a third flowchart of cross-network positioning according to an embodiment of the present application. As shown in FIG. 9, the UE accesses network 1 and sends its location information to a location service client of network 2, and the location management function is located in network 1. At this time, cooperation of nodes in the two networks is required to obtain information of the UE.

Step 1: in case that the UE is in CM-IDLE state, the UE initiates a UE triggered service request procedure and establishes a signaling connection with access and mobility management function 1.

Step 2: the UE sends an uplink non-access stratum message, which includes a MO-LR request message. The MO-LR request includes up to 3 LPP positioning messages in some embodiments. The UE may request different types of positioning services: a location of the UE, the location of the UE to be sent to a location service client or a network function, or location assistance data. In case that the UE is requesting its own location or sends its own location to the location service client or the network function, the message carries QoS information of a location service request (such as an accuracy, a response time, a location service QoS class), a requested maximum time of location, a requested type of location (such as a current location, or a current or last known location). In any of the embodiments of the present application, in case that the type of location is a current location, the message may further include a scheduled location time. If the UE requests to send the location to the location service client, the message should further include an identifier of the location service client or the network function, and may further include an address of a gateway mobile location center that sends location information to the location service client or the network function. In addition, the message may further include a service type, this parameter indicates which MO-LR service of the location service client requested by the UE. The message may further include a pseudonym indicator, indicating a pseudonym should be assigned by the network and transferred to the location service client as the UE's identity. In case that the UE requests location assistance data, an embedded LPP message includes a type of the assistance data and a positioning method applicable to the assistance data.

In case that the requested type of location is "a current or last known location" and a requested maximum time parameter of location is available, access and mobility management function 1 determines whether it stores a previously obtained location and a timestamp of the location (if available) of the target UE. In case that access and mobility management function 1 stores the location information and the timestamp of the location (if available), and the location satisfies a requested accuracy and the requested maximum time of location, access and mobility management function 1 skips steps 3 to step 6.

Step 3: same as step 7 in embodiment 2.

Step 4: access and mobility management function 1 sends a *DetermineLocation Request* message to location management function 1. The request includes a location service association identifier, a serving cell identifier, a client type, and an indication of whether a location or location assistance data is requested, a list of MO-LR subscribed assistance data, a UE positioning capability (if available), and an embedded LPP message in a MO-LR request. In case that the location of the UE is requested, a service operation further includes an indication of whether the UE supports LPP, a requested QoS and a supported GAD shape, and any scheduled location time. In case that location assistance data is requested, the embedded LPP message includes a type of requested location assistance data. Once access and mobility management function 1 selects a location management function, access and mobility management function 1 uses the location management function during a signaling procedure.

Step 5: in case that the UE requests its own location, a procedure of clause 6.11 in 23273 is performed. In case that the UE provides a scheduled location time, details may be referred to a behavior in step 12 of clause 6.1.2 in 23273. In case that the UE requests location assistance data, location management function 1 sends the data to the UE, as described in clause 6.11.1. The location management function 1 determines to-be-sent location assistance data based on a type of assistance data requested by the UE, a UE positioning capability, a MO-LR subscribed assistance data and a current cell.

Step 6: in case that a location that satisfies a requested QoS has been obtained, or the requested location assistance data has been sent to the UE, location management function 1 sends *a DetermineLocation response* message to access and mobility management function 1. The response includes a location service association identifier, location information (if it was obtained), a time and accuracy of the location, and may further include information about a positioning method.

In case that the location information was not successfully obtained, or the location assistance data cannot be successfully sent to the UE, the above response includes a failure cause.

In case that the UE positioning capability received by location management function 1 in step 5 includes an indication that the capability is non-variable, and location management function 1 does not receive the UE positioning capability from access and mobility management function 1 in step 4, a service operation further includes the UE positioning capability. In case that the UE requests assistance data, step 7 to step 12 are skipped.

Step 7: in case that the location information is successfully obtained, access and mobility management function 1 sends a *LocationUpdate Request* message to gateway mobile location center 2. One parameter is added to this message, that is, message type: gateway mobile location center 2, which is transparently transmitted to gateway mobile location center 2 by access and mobility management function 2. The request includes a UE's identifier, an event causing the location (5GC-MO-LR), location information, a time and accuracy of the location, and a location service QoS class requested by the target UE. In addition, the service operation may further include a pseudonym indicator, a location service client identifier, an application function identifier, an address of gateway mobile location center 2, and a timestamp of the location and a service identifier provided by the UE (if available).

Step 8: gateway mobile location center 2 sends the location information to the location service client, which includes a pseudonym of the UE, an event causing the location (5GC-MO-LR), a service identifier (if available) and location information, a timestamp of the location (if available) and time, and a location service QoS class requested by the target UE.

Step 8b-1: in case that step 1 includes an application function identifier, gateway mobile location center 2 allocates a network exposure function based on a local configuration or through a network storage function, and sends a location update request service operation to the network exposure function, which includes the application function identifier and the location information. The location information is the same as step 8a.

Step 8b-2: in case that the identified application function is not accessible by the network exposure function, step 8b-2 and step 9b-1 are skipped. Otherwise, the network exposure function sends the location information to the identified application function.

Step 9a: in case that the location service client does not support a MO-LR (due to temporary or permanent reasons) or cannot handle the location information of the UE, for example, the location service client does not identify the service identifier, or the UE does not register to the location service client, and the location service client has no data of the UE, the location service client shall return a location information acknowledgement message including an error cause to gateway mobile location center 2. Otherwise, the location service client handles the location information based on the service identifier and returns a location information acknowledgement message to gateway mobile location center 2, indicating that the location information of the UE has been successfully handled.

Step 9b-1: in case that the application function cannot process the location information of the UE, for example, the UE does not register to the application function and the application function has no data of the UE, the application function should return a location information acknowledgement message to the network exposure function, including an appropriate error cause. Otherwise, the application function handles the location information based on the service identifier and sends a location information acknowledgement message to the network exposure function, indicating that the location information of the UE has been successfully handled.

Step 9b-2: the network exposure function sends a *LocationUpdate Response* message to gateway mobile location center 2, which carries a location information acknowledgement message.

Step 10: in case that the identified location service client or application function is not accessible, gateway mobile location center 2 sends a *Location Update Response* message to access and mobility management function 1. One parameter is added to this message, that is, message type: access and mobility management function 1, which indicates that access and mobility management function 2 transparently transmits the message to access and mobility management function 1 and carries a suitable error cause. Otherwise, a response message should include an acknowledgement. The message should indicate whether the location information of the UE has been successfully handled by the identified location service client or the application function. If not, the error cause obtained in step 8 or step 9 is returned.

Step 11: access and mobility management function 1 includes a MO-LR response message in downlink non-access stratum message transmission and returns it to the UE. In case that the UE requests its own location, the response message includes any location information requested by the UE and a timestamp of the location (if available), as well as whether the location satisfies the requested accuracy and whether the location has been successfully sent to the identified location service client or an application function. If successful, the MO-LR response message further includes whether the location information has been successfully handled by the identified location service client or the application function. If not, the message further includes the error cause obtained in step 10.

Embodiment 4: a UE initiates a positioning request, and a location management function is within network 2.

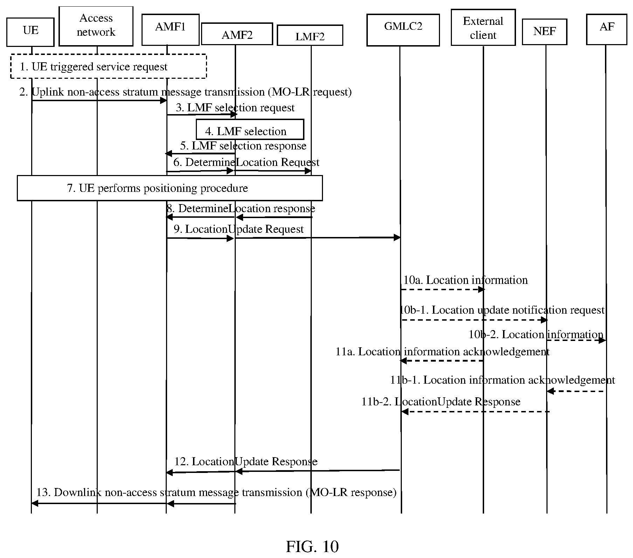

FIG. 10 is a fourth flowchart of cross-network positioning according to an embodiment of the present application. As shown in FIG. 10, the UE accesses network 1 and sends its location information to a location service client of network 2, and the location management function is located in network 2. At this time, cooperation of nodes in the two networks is required to obtain information of the UE.

Step 1 to step 2: same as step 1 to step 2 in embodiment 3.

Step 3: since access and mobility management function 1 does not select a suitable location management function in network 1, access and mobility management function 1 sends a location management function selection request to access and mobility management function 2.

Step 4: access and mobility management function 2 selects location management function 2 based on relevant available information or based on a local configuration of access and mobility management function 1. A current serving 5G-AN for the UE is also considered in a selection procedure. A network storage function may be used during the selection procedure.

Step 5: after selecting location management function 2 capable of serving, access and mobility management function 2 sends a selection response to access and mobility management function 1.

Step 6 to step 8: same as step 4 to step 6 in embodiment 3, except that access and mobility management function 2 needs to transparently transmit the information to location management function 2.

Step 9 to step 13: same as step 7 to step 11 in embodiment 3.

Embodiment 5: a deferred mobile terminated location request in non-roaming scenario, where a location management function is within network 2.

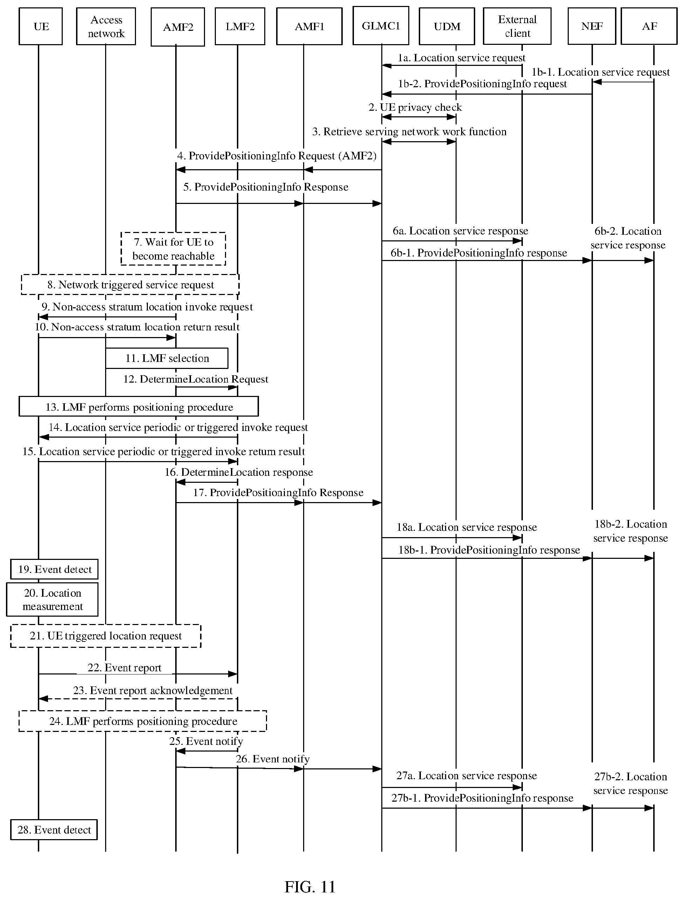

FIG. 11 is a fifth flowchart of cross-network positioning according to an embodiment of the present application. As shown in FIG. 11, a location service client or an application function of network 1 wants to obtain location information of a target UE accessing network 2, and the location management function is located in network 2. At this time, cooperation of nodes in the two networks is required to obtain information of the UE.

Step 1a: an external location service client or an application function (through a network exposure function) sends a request to gateway mobile location center 1 for a periodic, triggered or UE available location report. The location service request includes a type of request, i.e. a periodic or triggered location report, and associated parameters. For a periodic location request, the location service request includes a time interval between successive location reports, a total quantity of reports, and may further include a location QoS. For periodic location reporting, the location service request may include a scheduled location time for a first periodic location report. For area event reporting, a location service request includes details of a target area, and events to be reported are the UE being within the target area, entering into or leaving the target area, a duration of event reporting, minimum and maximum time intervals between successive event reports, a maximum event sampling interval, whether the location information (and an associated location QoS) should be included in an event report, and one or more location reports being required. If a location area is expressed by a local coordination system or a geographical name, the gateway mobile location center should convert a target area into a geographical area. For motion event reporting, the location service request includes a linear distance threshold, a duration of event reporting, minimum and maximum time intervals between successive event reports, a maximum event sampling interval, whether the location information (and an associated location QoS) should be included in an event report, and whether only one or more location reports are required.

Step 1b-1: the application function sends a location service request to the network exposure function.

Step 1b-2: the network exposure function forwards the request to gateway mobile location center 1.

Step 2: gateway mobile location center 1 may verify UE privacy requirements.

Step 3: gateway mobile location center 1 requests an address of access and mobility management function 2 from a unified data management function.

Step 4: gateway mobile location center 1 sends a *ProvidePositioningInfo Request* message to access and mobility management function 2, to request a current location of the target UE, where the message is transparently transmitted by access and mobility management function 1. The service operation includes an address of gateway mobile location center 1, a location deferred request (LDR) index number, and a message type: access and mobility management function 2, and may further include a requested QoS and a supported GAD shape. Access and mobility management function 1 transparently transmits the message to access and mobility management function 2 of a network where the target UE is located based on indication of the message type.

Step 5: in case that access and mobility management function 2 supports a location deferred request, access and mobility management function 2 sends a *ProvidePositioningInfo Response* message to access and mobility management function 1, where the message carries a parameter, that is, message type: gateway mobile location center 1, and access and mobility management function 1 sends a *ProvidePositioningInfo Response* to gateway mobile location center 1 based on the indication, and returns an acknowledgement to indicate that the location deferred request is accepted.

Step 6: gateway mobile location center 1 returns an acknowledgement to the external client and application function to indicate that the location deferred request is accepted.

Step 7: in case that the UE is not currently reachable, for example, the UE is using an extended discontinuous reception mode (eDRX) or a power saving mode (PSM), access and mobility management function 2 waits for the UE to become reachable.

Step 8: once the UE is reachable, if the UE is in a CM-IDLE state again, access and mobility management function 2 initiates a network triggered service request procedure and establishes a signaling connection with the UE.

Step 9 to step 10: in case that the location request received in step 4 requires a privacy check and the UE supports this function, access and mobility management function 2 notifies the UE of the location request and verifies the privacy requirements. If a type of the location deferred request is a periodic or triggered location request, access and mobility management function 2 further includes the type of the location deferred request in a notification message.

Step 11: access and mobility management function 2 selects a location management function 2 capable of serving.

Step 12: access and mobility management function 2 sends a *DetermineLocation Request* message to location management function 2 to request a deferred UE location.

Step 13: location management function 2 performs a positioning procedure as described in clause 6.11 of 23273.

Step 14: in case that a periodic or triggered location is requested, a location service periodic-triggered invoke request is sent to the UE through access and mobility management function 2.

Step 15: in case that the request in step 14 may be supported, the UE returns a service acknowledgement to location management function 2, and access and mobility management function 2 sends the message to location management function 2 based on an immediate routing identifier in the message.

Step 16: location management function 2 responds to access and mobility management function 2 with the request message received in step 12.

Step 17: access and mobility management function 2 sends a *ProvidePositioningInfo Response* message to access and mobility management function 1, where the message carries a parameter, that is, message type: gateway mobile location center 1, and access and mobility management function 1 sends a *ProvidePositioningInfo Response* message to gateway mobile location center 1 based on the indication. The message includes any location information received in step 16. For a periodic or triggered location, the message further includes an acknowledgement of whether the periodic or triggered location request is successfully activated in the target UE.

Step 18: gateway mobile location center 1 sends a response to the external location client or the application function (through the network exposure function). In case that the positioning request in step 1 is for a UE available location event, the procedure terminates and step 19 to step 28 do not need to be performed.

Step 19: for a periodic or triggered location request, step 14 and step 15 have been successfully performed, and the UE monitors occurrence of a trigger condition or a periodic event requested in step 16.

Step 20: the UE obtains location measurements or location information based on requirements in step 14.

Step 21: in case that the UE is in an idle state, the UE performs a UE triggered service request procedure and establishes a signaling connection with access and mobility management function 2.

Step 22: the UE sends a service event report to location management function 2 through the service access and mobility management function 2, and access and mobility management function 2 sends the event report to location management function 2.

Step 23: in case that location management function 2 receives the event report, if location management function 2 can process the event report, location management function 2 returns an acknowledgement to the UE.

Step 24: location management function 2 performs a positioning procedure. Details may be referred to 6.11 of 23273.

Step 25: location management function 2 reports the event type to access and mobility management function 2.

Step 26: access and mobility management function 2 sends an *EventNotify* message to access and mobility management function 1, where the message carries a parameter, that is, message type: gateway mobile location center 1, and access and mobility management function 1 sends the *EventNotify* message to gateway mobile location center 1 based on the indication. The message includes a type of event being reported, an LDR index number, and any location information and a timestamp of the location (if available) obtained in step 24.

Step 27: gateway mobile location center 1 uses the LDR index number received in step 24 or 26 to identify the periodic and triggered location requests received in step 1 and sends the type of event reported, as well as the location information and the timestamp of the location (if available) to the external location client or the application function (through the network exposure function). Gateway mobile location center 1 may also verify the UE privacy requirements before reporting any event or any location to the external location client or the application function.

Step 28: the UE continues to monitor a periodic or triggered event, and after an event is detected, step 20 to step 27 are performed.

Embodiment 6: a deferred mobile terminated location request in non-roaming scenario, where a location management function is within network 1.

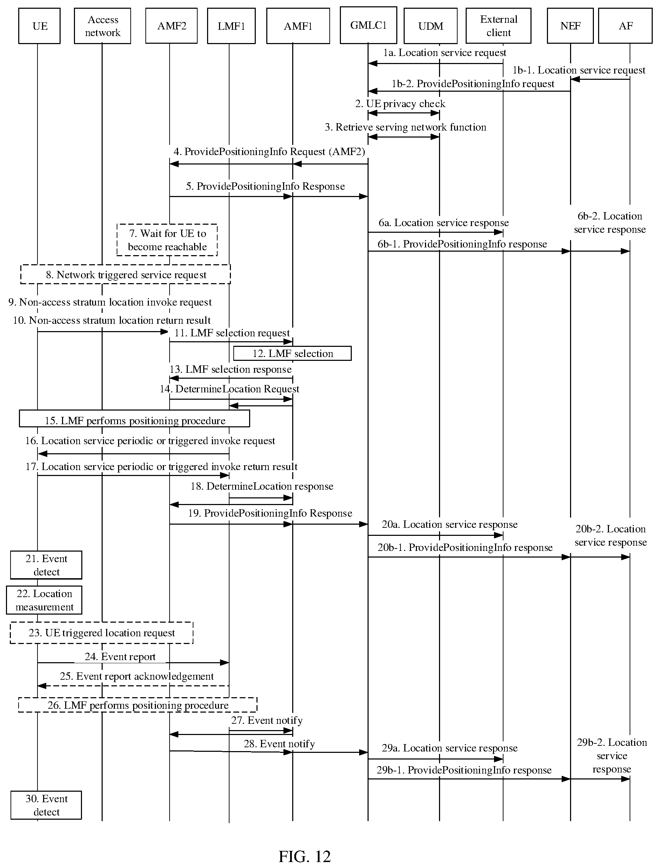

FIG. 12 is a sixth flowchart of cross-network positioning according to an embodiment of the present application. As shown in FIG. 12, this embodiment refers to a location service client or an application function of network 1 wants to obtain location information of a target UE accessing network 2, and the location management function is located in network 1. At this time, cooperation of nodes in the two networks is required to obtain information of the UE.

Step 1 to step 10 are same as step 1 to step 10 in embodiment 5.

Step 11: since access and mobility management function 2 does not select a suitable location management function in the network 2, access and mobility management function 2 sends a location management function selection request to access and mobility management function 1, to allow access and mobility management function 1 select location management function 1 capable of serving.

Step 12: access and mobility management function 1 selects location management function 1 based on associated available information or based on a local configuration of access and mobility management function 1. A current serving 5G-AN for the UE is also considered in a selection procedure. A network storage function may be used during the selection procedure.

Step 13: after selecting location management function 1 capable of serving, access and mobility management function 1 sends a selection response to access and mobility management function 2.

Step 14: access and mobility management function 2 sends the location request message to location management function 1, and access and mobility management function 1 needs to perform transparent transmission during this procedure.

Step 15 to step 17: same as step 13 to step 15 in embodiment 5.

Step 18: location management function 1 sends a location request message to access and mobility management function 2, and access and mobility management function 1 needs to perform transparent transmission during this procedure.

Step 19 to step 26: same as steps 17 to step 24 in embodiment 5.

Step 27: location management function 1 reports an event type to access and mobility management function 2, and access and mobility management function 1 needs to perform transparent transmission during this procedure.

Step 28 to step 30: same as step 26 to step 28 in embodiment 5.

### Embodiment 7:

The method is also applicable to batch operations of location service requests for multiple UEs based on a mobile terminated location request and a deferred mobile terminated location request. That is, embodiments 1, 2, 5, and 6 are for a single UE. In case that the location request is for multiple UEs, the method is also applicable, except that the information identifying the UE is different.

### Embodiment 8:

Network nodes in the above embodiments may be centralized network nodes or distributed network nodes.

The methods and devices provided by the various embodiments of the present application are based on same application concepts. Since the methods and apparatuses solve problems based on similar principles, implementations of the apparatuses and methods may be referred to each other, and the repetitions will not be repeated.

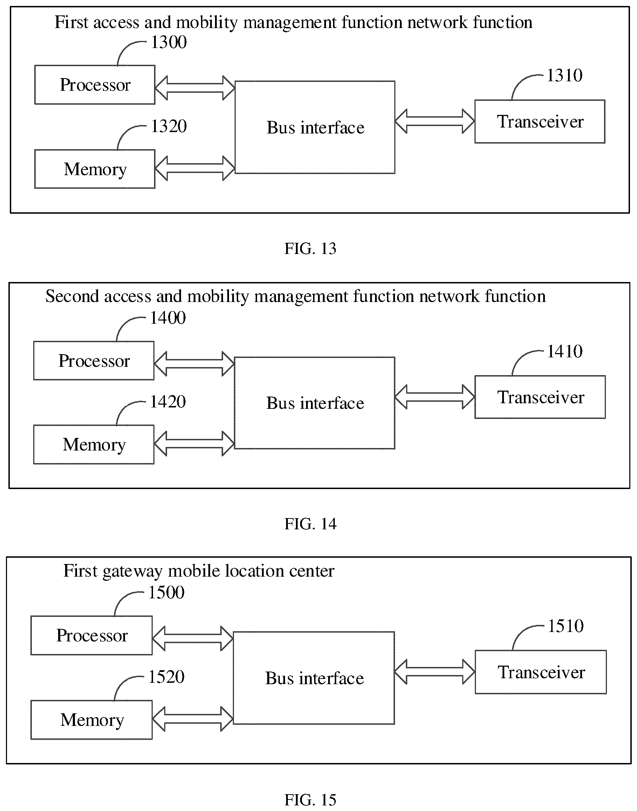

FIG. 13 is a schematic structural diagram of a first access and mobility management function network function according to an embodiment of the present application. As shown in FIG. 13, the first access and mobility management function network function includes a memory 1320, a transceiver 1310 and a processor 1300, where the processor 1300 and the memory 1320 may also be physically arranged separately.

The memory 1320 is used for storing a computer program, the transceiver 1310 is used for receiving and sending data under control of the processor 1300.

In FIG. 13, a bus architecture may include any number of interconnected buses and bridges, which are linked together through various circuits of one or more processors represented by the processor 1300 and one or more memories represented by the memory 1320. The bus architecture may also link together various other circuits, such as peripherals, voltage regulators, and power management circuits, etc., which are well known in the art, and therefore are not further described in the present application. A bus interface provides an interface. The transceiver 1310 may include multiple elements, i.e., including a transmitter and a receiver, units for providing communication with various other devices over transmission media including wireless channels, wired channels, fiber optic cables, and the like.

The processor 1300 is responsible for managing the bus architecture and general processing, and the memory 1320 may store data used by the processor 300 when performing operations.

The processor 1300 may be a central processing unit (CPU), an application specific integrated circuit (ASIC), a field-programmable gate array (FPGA), or a complex programmable logic device (CPLD), the processor may also use a multi-core architecture.

The processor 1300 is used for performing any method provided by the embodiments of the present application according to an obtained executable instruction by calling the computer program stored in the memory 1320, for example: receiving a positioning message sent from a first network function, where the positioning message includes indication information, and the indication information is used to indicate the first access and mobility management function network function to send the positioning message to a second network function, where the first network function and the second network function are in different networks, and the first network function or the second network function is in a same network with the first access and mobility management function network function; and
sending the positioning message to the second network function based on the indication information.

In any of the embodiments of the present application, receiving the positioning message sent from the first network function includes:
receiving a positioning message sent from a first gateway mobile location center, where the positioning message includes indication information, and the indication information is used to indicate the first access and mobility management function network function to send the positioning message to a second access and mobility management function network function; or
receiving a positioning message sent from a second access and mobility management function network function, where the positioning message includes indication information, and the indication information is used to indicate the first access and mobility management function network function to send the positioning message to a first gateway mobile location center,
where the first gateway mobile location center and the first access and mobility management function network function are network nodes in a first network, and the second access and mobility management function network function is a network node in a second network.

In any of the embodiments of the present application, receiving the positioning message sent from the first gateway mobile location center includes:
receiving a first request message sent from the first gateway mobile location center, where the first request message is used to request location information of a target user equipment (UE) accessing the second network, the first request message includes first indication information, and the first indication information is used to indicate the first access and mobility management function network function to send the first request message to the second access and mobility management function network function.

In any of the embodiments of the present application, the operations further include:
receiving a first response message sent from the second access and mobility management function network function, where the first response message includes location information of the target UE and second indication information, and the second indication information is used to indicate the first access and mobility management function network function to send the first response message to the first gateway mobile location center.

In any of the embodiments of the present application, receiving the positioning message sent from the second access and mobility management function network function includes:
receiving a second request message sent from the second access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center.

In any of the embodiments of the present application, the operations further include:
receiving a second response message sent from the first gateway mobile location center, where the second response message is used to indicate whether the third network function successfully handles the location information of the target UE, the second response message includes fourth indication information, and the fourth indication information is used to indicate the first access and mobility management function network function to send the second response message to the second access and mobility management function network function.

In any of the embodiments of the present application, before receiving the first response message sent from the second access and mobility management function network function, or before receiving the second request message sent from the second access and mobility management function network function, the operations further include:
receiving a third request message sent from the second access and mobility management function network function, where the third request message is used to request the location information of the target UE, the third request message includes fifth indication information, and the fifth indication information is used to indicate the first access and mobility management function network function to send the third request message to a first location management function network function in the first network; and
receiving a third response message sent from the first location management function network function, where the third response message includes the location information of the target UE and sixth indication information, and the sixth indication information is used to indicate the first access and mobility management function network function to send the third response message to the second access and mobility management function network function.

In any of the embodiments of the present application, before receiving the third request message sent from the second access and mobility management function network function, the operations further include:
receiving a fourth request message sent from the second access and mobility management function network function, where the fourth request message is used to request the first access and mobility management function network function to select a first location management function network function for providing a positioning service for the target UE; and
sending information of the first location management function network function to the second access and mobility management function network function based on the fourth request message.

In any of the embodiments of the present application, the network includes a distributed network or a centralized network.

In any of the embodiments of the present application, the first access and mobility management function network function and the second access and mobility management function network function interact directly with each other, or interact indirectly through a third network.

FIG. 14 is a schematic structural diagram of a second access and mobility management function network function according to an embodiment of the present application. As shown in FIG. 14, the second access and mobility management function network function includes a memory 1420, a transceiver 1410 and a processor 1400, where the processor 1400 and the memory 1420 may also be physically arranged separately.

The memory 1420 is used for storing a computer program, the transceiver 1410 is used for receiving and sending data under control of the processor 1400.

In FIG. 14, a bus architecture may include any number of interconnected buses and bridges, which are linked together through various circuits of one or more processors represented by the processor 1400 and one or more memories represented by the memory 1420. The bus architecture may also link together various other circuits, such as peripherals, voltage regulators, and power management circuits, etc., which are well known in the art, and therefore are not further described in the present application. The bus interface provides an interface. The transceiver 1410 may include multiple elements, i.e., including a transmitter and a receiver, units for providing communication with various other devices over transmission media including wireless channels, wired channels, fiber optic cables, and the like.

The processor 1400 is responsible for managing the bus architecture and general processing, and the memory 1420 may store data used by the processor 400 when performing operations.

The processor 1400 may be a CPU, an ASIC, a FPGA, or a CPLD, the processor may also use a multi-core architecture.

The processor 1400 is used for performing any method provided by the embodiments of the present application according to an obtained executable instruction by calling the computer program stored in the memory 1420, for example: sending a positioning message to a first access and mobility management function network function, where the positioning message includes indication information, and the indication information is used to indicate the first access and mobility management function network function to send the positioning message to a first gateway mobile location center,
where the first gateway mobile location center and the first access and mobility management function network function are network nodes in a first network, and the second access and mobility management function network function is a network node in a second network.

In any of the embodiments of the present application, sending the positioning message to the first access and mobility management function network function includes:
receiving a first request message sent, through the first access and mobility management function network function, from a first gateway mobile location center, where the first request message is used to request location information of a target user equipment (UE) accessing the second network, the first request message includes first indication information, and the first indication information is used to indicate the first access and mobility management function network function to send the first request message to the second access and mobility management function network function; and
sending a first response message to the first access and mobility management function network function based on the first request message, where the first response message includes location information of the target UE and second indication information, and the second indication information is used to indicate the first access and mobility management function network function to send the first response message to the first gateway mobile location center.

In any of the embodiments of the present application, sending the positioning message to the first access and mobility management function network function includes:
sending a second request message to the first access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center.

In any of the embodiments of the present application, before sending the positioning message to the first access and mobility management function network function, the operations further include:
sending a third request message to the first access and mobility management function network function, where the third request message is used to request the location information of the target UE, the third request message includes fifth indication information, and the fifth indication information is used to indicate the first access and mobility management function network function to send the third request message to a first location management function network function in the first network; and
receiving a third response message sent, through the first access and mobility management function network function, from the first location management function network function, where the third response message includes the location information of the target UE and sixth indication information, and the sixth indication information is used to indicate the first access and mobility management function network function to send the third response message to the second access and mobility management function network function.

In any of the embodiments of the present application, before sending the third request message to the first access and mobility management function network function, the operations further include:
sending a fourth request message to the first access and mobility management function network function, where the fourth request message is used to request the first access and mobility management function network function to select a first location management function network function for providing a positioning service for the target UE; and
receiving information of the first location management function network function sent from the first access and mobility management function network function.

FIG. 15 is a schematic structural diagram of a first gateway mobile location center according to an embodiment of the present application. As shown in FIG15, the first gateway mobile location center includes a memory 1520, a transceiver 1510 and a processor 1500, where the processor 1500 and the memory 1520 may also be arranged physically separately.

The memory 1520 is used for storing a computer program, the transceiver 1510 is used for receiving and sending data under control of the processor 1500.

In FIG. 15, a bus architecture may include any number of interconnected buses and bridges, which are linked together through various circuits of one or more processors represented by the processor 1500 and one or more memories represented by the memory 1520. The bus architecture may also link together various other circuits, such as peripherals, voltage regulators, and power management circuits, etc., which are well known in the art, and therefore are not further described in the present application. The bus interface provides an interface. The transceiver 1510 may include multiple elements, i.e., including a transmitter and a receiver, units for providing communication with various other devices over transmission media including wireless channels, wired channels, fiber optic cables, and the like.

The processor 1500 is responsible for managing the bus architecture and general processing, and the memory 1520 may store data used by the processor 1500 when performing operations.

The processor 1500 may be a CPU, an ASIC, a FPGA, or a CPLD, the processor may also use a multi-core architecture.

The processor 1500 is used for performing any method provided by the embodiments of the present application according to an obtained executable instruction by calling the computer program stored in the memory 1520, for example: sending a positioning message to a first access and mobility management function network function, where the positioning message includes indication information, and the indication information is used to indicate the first access and mobility management function network function to send the positioning message to a second access and mobility management function network function,
where the first gateway mobile location center and the first access and mobility management function network function are network nodes in a first network, and the second access and mobility management function network function is a network node in a second network.

In any of the embodiments of the present application, sending the positioning message to the first access and mobility management function network function includes:
sending a first request message to the first access and mobility management function network function, where the first request message is used to request location information of a target user equipment (UE) accessing the second network, the first request message includes first indication information, and the first indication information is used to indicate the first access and mobility management function network function to send the first request message to the second access and mobility management function network function.

In any of the embodiments of the present application, sending the positioning message to the first access and mobility management function network function includes:
receiving a second request message sent, through the first access and mobility management function network function, from the second access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center; and
sending a second response message to the first access and mobility management function network function based on the second request message, where the second response message is used to indicate whether the third network function successfully handles the location information of the target UE, the second response message includes fourth indication information, and the fourth indication information is used to indicate the first access and mobility management function network function to send the second response message to the second access and mobility management function network function.

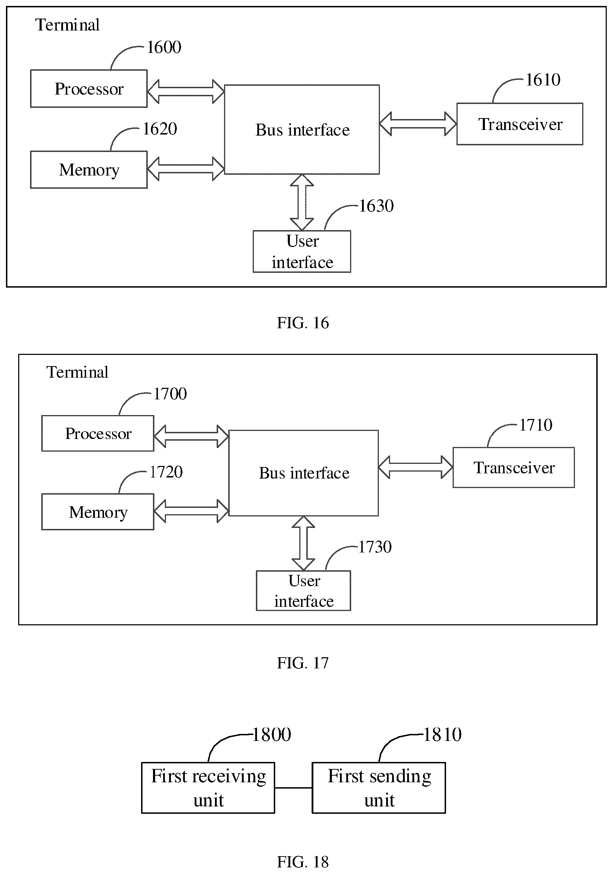

FIG. 16 is a first schematic structural diagram of a user equipment (UE) according to an embodiment of the present application. As shown in FIG. 16, the UE includes a memory 1620, a transceiver 1610 and a processor 1600, where the processor 1600 and the memory 1620 may also be arranged physically separately.

The memory 1620 is used for storing a computer program, the transceiver 1610 is used for receiving and sending data under control of the processor 1600.

In FIG. 16, a bus architecture may include any number of interconnected buses and bridges, which are linked together through various circuits of one or more processors represented by the processor 1600 and one or more memories represented by the memory 1620. The bus architecture may also link together various other circuits, such as peripherals, voltage regulators, and power management circuits, etc., which are well known in the art, and therefore are not further described in the present application. The bus interface provides an interface. The transceiver 1610 may include multiple elements, i.e., including a transmitter and a receiver, units for providing communication with various other devices over transmission media including wireless channels, wired channels, fiber optic cables, and the like. For different UEs, a user interface 1630 may be an interface capable of externally or internally connecting the required equipment, and the connected equipment includes, but not limited to, a small keypad, a display, a speaker, a microphone, a joystick, and the like.

The processor 1600 is responsible for managing the bus architecture and general processing, and the memory 1620 may store data used by the processor 1600 when performing operations.

The processor 1600 may be a CPU, an ASIC, a FPGA, or a CPLD, the processor may also use a multi-core architecture.

The processor 1600 is used for performing any method provided by the embodiments of the present application according to an obtained executable instruction by calling the computer program stored in the memory 1620, for example:
establishing a signaling connection between the UE and a second access and mobility management function network function based on a network triggered service request initiated by the second access and mobility management function network function,
where the network triggered service request is initiated by the second access and mobility management function network function based on a received first request message, where the first request message is sent from a first gateway mobile location center to the second access and mobility management function network function through a first access and mobility management function network function, the first request message is used to request location information of the UE, the first request message includes first indication information, and the first indication information is used to indicate the first access and mobility management function network function to send the first request message to the second access and mobility management function network function; and
where the first gateway mobile location center and the first access and mobility management function network function are network nodes in a first network, the second access and mobility management function network function is a network node in a second network, and the UE accesses the second network.

FIG. 17 is a second schematic structural diagram of a user equipment (UE) according to an embodiment of the present application. As shown in FIG. 17, the UE includes a memory 1720, a transceiver 1710 and a processor 1700, where the processor 1700 and the memory 1720 may also be arranged physically separately.

The memory 1720 is used for storing a computer program, the transceiver 1710 is used for receiving and sending data under control of the processor 1700.

In FIG. 17, a bus architecture may include any number of interconnected buses and bridges, which are linked together through various circuits of one or more processors represented by the processor 1700 and one or more memories represented by the memory 1720. The bus architecture may also link together various other circuits, such as peripherals, voltage regulators, and power management circuits, etc., which are well known in the art, and therefore are not further described in the present application. The bus interface provides an interface. The transceiver 1710 may include multiple elements, i.e., including a transmitter and a receiver, units for providing communication with various other devices over transmission media including wireless channels, wired channels, fiber optic cables, and the like. For different UEs, a user interface 1730 may be an interface capable of externally or internally connecting the required equipment, and the connected equipment includes, but not limited to, a small keypad, a display, a speaker, a microphone, a joystick, and the like.

The processor 1700 is responsible for managing the bus architecture and general processing, and the memory 1720 may store data used by the processor 1700 when performing operations.

The processor 1700 may be a CPU, an ASIC, a FPGA, or a CPLD, the processor may also use a multi-core architecture.

The processor 1700 is used for performing any method provided by the embodiments of the present application according to an obtained executable instruction by calling the computer program stored in the memory 1720, for example:
sending a fifth request message to a second access and mobility management function network function, where the fifth request message includes information of a third network function, the fifth request message is used to trigger the second access and mobility management function network function to send a second request message to a first access and mobility management function network function, the second request message is used to provide the third network function with location information of the UE, the second request message includes the location information of the UE, information of the third network function and third indication information, and the third indication information is used to indicate the first access and mobility management function network function to send the second request message to a first gateway mobile location center,
where the first gateway mobile location center and the first access and mobility management function network function are network nodes in a first network, the second access and mobility management function network function is a network node in a second network, the UE accesses the second network, and the third network function accesses the first network.

It should be noted here that the above-mentioned first access and mobility management function network function, second access and mobility management function network function, first gateway mobile location center and UE provided in the embodiment of the present application can implement all the method steps implemented in the above-mentioned method embodiment, and can achieve the same technical effect. The parts and beneficial effects that are the same as those in the method embodiment will not be described in detail here.

FIG. 18 is a first schematic structural diagram of an apparatus for positioning message transmission according to an embodiment of the present application. The apparatus is for use in a first access and mobility management function network function. As shown in FIG. 18, the apparatus includes:
a first receiving unit 1800, used for receiving a positioning message sent from a first network function, where the positioning message includes indication information, and the indication information is used to indicate the first access and mobility management function network function to send the positioning message to a second network function, where the first network function and the second network function are in different networks, and the first network function or the second network function is in a same network with the first access and mobility management function network function; and
a first sending unit 1810, used for sending the positioning message to the second network function based on the indication information.

In any of the embodiments of the present application, receiving the positioning message sent from the first network function includes:
receiving a positioning message sent from a first gateway mobile location center, where the positioning message includes indication information, and the indication information is used to indicate the first access and mobility management function network function to send the positioning message to a second access and mobility management function network function; or
receiving a positioning message sent from a second access and mobility management function network function, where the positioning message includes indication information, and the indication information is used to indicate the first access and mobility management function network function to send the positioning message to a first gateway mobile location center,
where the first gateway mobile location center and the first access and mobility management function network function are network nodes in a first network, and the second access and mobility management function network function is a network node in a second network.

In any of the embodiments of the present application, receiving the positioning message sent from the first gateway mobile location center includes:
receiving a first request message sent from the first gateway mobile location center, where the first request message is used to request location information of a target user equipment (UE) accessing the second network, the first request message includes first indication information, and the first indication information is used to indicate the first access and mobility management function network function to send the first request message to the second access and mobility management function network function.

In any of the embodiments of the present application, the first receiving unit 1800 is further used for:
receiving a first response message sent from the second access and mobility management function network function, where the first response message includes location information of the target UE and second indication information, and the second indication information is used to indicate the first access and mobility management function network function to send the first response message to the first gateway mobile location center.

In any of the embodiments of the present application, receiving the positioning message sent from the second access and mobility management function network function includes:
receiving a second request message sent from the second access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center.

In any of the embodiments of the present application, the first receiving unit 1800 is further used for:
receiving a second response message sent from the first gateway mobile location center, where the second response message is used to indicate whether the third network function successfully handles the location information of the target UE, the second response message includes fourth indication information, and the fourth indication information is used to indicate the first access and mobility management function network function to send the second response message to the second access and mobility management function network function.

In any of the embodiments of the present application, the first receiving unit 1800 is further used for:
receiving a third request message sent from the second access and mobility management function network function, where the third request message is used to request the location information of the target UE, the third request message includes fifth indication information, and the fifth indication information is used to indicate the first access and mobility management function network function to send the third request message to a first location management function network function in the first network; and
receiving a third response message sent from the first location management function network function, where the third response message includes the location information of the target UE and sixth indication information, and the sixth indication information is used to indicate the first access and mobility management function network function to send the third response message to the second access and mobility management function network function.

In any of the embodiments of the present application, the first receiving unit 1800 is further used for:
receiving a fourth request message sent from the second access and mobility management function network function, where the fourth request message is used to request the first access and mobility management function network function to select a first location management function network function for providing a positioning service for the target UE; and
where the first sending unit 1800 is further used for:
   sending information of the first location management function network function to the second access and mobility management function network function based on the fourth request message.

In any of the embodiments of the present application, the network includes a distributed network or a centralized network.

In any of the embodiments of the present application, the first access and mobility management function network function and the second access and mobility management function network function interact directly with each other, or interact indirectly through a third network.

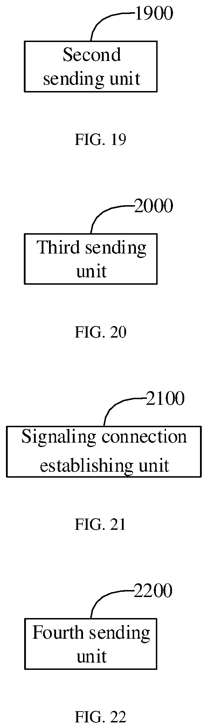

FIG. 19 is a second schematic structural diagram of an apparatus for positioning message transmission according to an embodiment of the present application. The apparatus is for use in a second access and mobility management function network function. As shown in FIG. 19, the apparatus includes:
a second sending unit 1900, used for sending a positioning message to a first access and mobility management function network function, where the positioning message includes indication information, and the indication information is used to indicate the first access and mobility management function network function to send the positioning message to a first gateway mobile location center,
where the first gateway mobile location center and the first access and mobility management function network function are network nodes in a first network, and the second access and mobility management function network function is a network node in a second network.

In any of the embodiments of the present application, sending the positioning message to the first access and mobility management function network function includes:
receiving a first request message sent, through the first access and mobility management function network function, from a first gateway mobile location center, where the first request message is used to request location information of a target user equipment (UE) accessing the second network, the first request message includes first indication information, and the first indication information is used to indicate the first access and mobility management function network function to send the first request message to the second access and mobility management function network function; and
sending a first response message to the first access and mobility management function network function based on the first request message, where the first response message includes location information of the target UE and second indication information, and the second indication information is used to indicate the first access and mobility management function network function to send the first response message to the first gateway mobile location center.

In any of the embodiments of the present application, sending the positioning message to the first access and mobility management function network function includes:
sending a second request message to the first access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center.

In any of the embodiments of the present application, the second sending unit 1900 is further used for:
sending a third request message to the first access and mobility management function network function, where the third request message is used to request the location information of the target UE, the third request message includes fifth indication information, and the fifth indication information is used to indicate the first access and mobility management function network function to send the third request message to a first location management function network function in the first network; and
the apparatus further includes a second receiving unit, used for:
   receiving a third response message sent, through the first access and mobility management function network function, from the first location management function network function, where the third response message includes the location information of the target UE and sixth indication information, and the sixth indication information is used to indicate the first access and mobility management function network function to send the third response message to the second access and mobility management function network function.

In any of the embodiments of the present application, the second sending unit 1900 is further used for:
sending a fourth request message to the first access and mobility management function network function, where the fourth request message is used to request the first access and mobility management function network function to select a first location management function network function for providing a positioning service for the target UE; and
receiving information of the first location management function network function sent from the first access and mobility management function network function.

FIG. 20 is a third schematic structural diagram of an apparatus for positioning message transmission according to an embodiment of the present application. The apparatus is for use in a first gateway mobile location center. As shown in FIG. 20, the apparatus includes:
a third sending unit 2000, used for sending a positioning message to a first access and mobility management function network function, where the positioning message includes indication information, and the indication information is used to indicate the first access and mobility management function network function to send the positioning message to a second access and mobility management function network function,
where the first gateway mobile location center and the first access and mobility management function network function are network nodes in a first network, and the second access and mobility management function network function is a network node in a second network.

In any of the embodiments of the present application, sending the positioning message to the first access and mobility management function network function includes:
sending a first request message to the first access and mobility management function network function, where the first request message is used to request location information of a target user equipment (UE) accessing the second network, the first request message includes first indication information, and the first indication information is used to indicate the first access and mobility management function network function to send the first request message to the second access and mobility management function network function.

In any of the embodiments of the present application, sending the positioning message to the first access and mobility management function network function includes:
receiving a second request message sent, through the first access and mobility management function network function, from the second access and mobility management function network function, where the second request message is used to provide a third network function accessing the first network with location information of a target user equipment (UE) accessing the second network, the second request message includes the location information of the target UE, information of the third network function and third indication information, and the third indication information is used to indicate the first access and mobility management function network function to send the second request message to the first gateway mobile location center; and
sending a second response message to the first access and mobility management function network function based on the second request message, where the second response message is used to indicate whether the third network function successfully handles the location information of the target UE, the second response message includes fourth indication information, and the fourth indication information is used to indicate the first access and mobility management function network function to send the second response message to the second access and mobility management function network function.

FIG. 21 is a fourth schematic structural diagram of an apparatus for positioning message transmission according to an embodiment of the present application. The apparatus is for use in a user equipment (UE). As shown in FIG. 21, the apparatus includes:
a signaling connection establishing unit 2100, used for establishing a signaling connection between the UE and a second access and mobility management function network function based on a network triggered service request initiated by the second access and mobility management function network function,
where the network triggered service request is initiated by the second access and mobility management function network function based on a received first request message, where the first request message is sent from a first gateway mobile location center to the second access and mobility management function network function through a first access and mobility management function network function, the first request message is used to request location information of the UE, the first request message includes first indication information, and the first indication information is used to indicate the first access and mobility management function network function to send the first request message to the second access and mobility management function network function; and
where the first gateway mobile location center and the first access and mobility management function network function are network nodes in a first network, the second access and mobility management function network function is a network node in a second network, and the UE accesses the second network.

FIG. 22 is a fifth schematic structural diagram of an apparatus for positioning message transmission according to an embodiment of the present application. The apparatus is for use in a user equipment (UE). As shown in FIG. 22, the apparatus includes:
a fourth sending unit 2200, used for sending a fifth request message to a second access and mobility management function network function, where the fifth request message includes information of a third network function, the fifth request message is used to trigger the second access and mobility management function network function to send a second request message to a first access and mobility management function network function, the second request message is used to provide the third network function with location information of the UE, the second request message includes the location information of the UE, information of the third network function and third indication information, and the third indication information is used to indicate the first access and mobility management function network function to send the second request message to a first gateway mobile location center,
where the first gateway mobile location center and the first access and mobility management function network function are network nodes in a first network, the second access and mobility management function network function is a network node in a second network, the UE accesses the second network, and the third network function accesses the first network.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a U disk, a mobile hard disk, a read-only memory (ROM), a random access memory (RAM), a magnetic disk, or a compact disk.

It should be noted here that the above-mentioned apparatuses provided by the embodiments of the present application may implement all the method steps implemented by the above-mentioned method embodiments, and may achieve the same effects. The same parts and beneficial effects in the embodiments as those in the method embodiments are not described in detail.

An embodiment of the present application further provides a computer-readable storage medium, where the computer-readable storage medium stores a computer program, and the computer program is used to cause a computer to perform the method for positioning message transmission provided by the above embodiments.

It should be noted here that the computer-readable storage medium provided by the embodiments of the present application may implement all the method steps implemented by the above-mentioned method embodiment, and may achieve the same effects. The same parts and beneficial effects in the embodiments as those in the method embodiments are not described in detail.

The computer-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

The solutions according to the embodiments of the present application may be applicable to various systems, including but not limited to 5G systems, 6G systems, or their evolved systems, or other orthogonal frequency division multiplexing (OFDM) systems, discrete Fourier transform spread OFDM (DFT-S-OFDM) systems, etc. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device. The systems may further include a core network part, such as an evolved packet system (EPS), a 5G system (5GS), and the like.

The terminal involved in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device involved in the embodiments of the present application may be a base station, and the base station may include multiple cells providing services for the terminal. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the base station and the terminal by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for positioning message transmission, performed by a first access and mobility management function network function, comprising:
receiving a positioning message sent from a first network function, wherein the positioning message contains indication information, and the indication information is used to indicate the first access and mobility management function network function to send the positioning message to a second network function, wherein the first network function and the second network function are in different networks, and the first network function or the second network function is in a same network with the first access and mobility management function network function; and
sending the positioning message to the second network function based on the indication information.

2. The method of claim 1, wherein receiving the positioning message sent from the first network function comprises:
receiving a positioning message sent from a first gateway mobile location center, wherein the positioning message contains indication information, and the indication information is used to indicate the first access and mobility management function network function to send the positioning message to a second access and mobility management function network function; or
receiving a positioning message sent from a second access and mobility management function network function, wherein the positioning message contains indication information, and the indication information is used to indicate the first access and mobility management function network function to send the positioning message to a first gateway mobile location center,
wherein the first gateway mobile location center and the first access and mobility management function network function are network nodes in a first network, and the second access and mobility management function network function is a network node in a second network.

3. The method of claim 2, wherein receiving the positioning message sent from the first gateway mobile location center comprises:
receiving a first request message sent from the first gateway mobile location center, wherein the first request message is used to request location information of a target user equipment, UE, accessing the second network, the first request message contains first indication information, and the first indication information is used to indicate the first access and mobility management function network function to send the first request message to the second access and mobility management function network function.

4. The method of claim 3, further comprising:
receiving a first response message sent from the second access and mobility management function network function, wherein the first response message comprises location information of the target UE and second indication information, and the second indication information is used to indicate the first access and mobility management function network function to send the first response message to the first gateway mobile location center.

5. The method of claim 2, wherein receiving the positioning message sent from the second access and mobility management function network function comprises:
receiving a second request message sent from the second access and mobility management function network function, wherein the second request message is used to provide a third network function accessing the first network with location information of a target user equipment, UE, accessing the second network, the second request message contains the location information of the target UE, information of the third network function and third indication information, and the third indication information is used to indicate the first access and mobility management function network function to send the second request message to the first gateway mobile location center.

6. The method of claim 5, further comprising:
receiving a second response message sent from the first gateway mobile location center, wherein the second response message is used to indicate whether the third network function successfully handles the location information of the target UE, the second response message comprises fourth indication information, and the fourth indication information is used to indicate the first access and mobility management function network function to send the second response message to the second access and mobility management function network function.

7. The method of claim 4 or 5, wherein before receiving the first response message sent from the second access and mobility management function network function, or before receiving the second request message sent from the second access and mobility management function network function, the method further comprises:
receiving a third request message sent from the second access and mobility management function network function, wherein the third request message is used to request the location information of the target UE, the third request message contains fifth indication information, and the fifth indication information is used to indicate the first access and mobility management function network function to send the third request message to a first location management function network function in the first network; and
receiving a third response message sent from the first location management function network function, wherein the third response message contains the location information of the target UE and sixth indication information, and the sixth indication information is used to indicate the first access and mobility management function network function to send the third response message to the second access and mobility management function network function.

8. The method of claim 7, wherein before receiving the third request message sent from the second access and mobility management function network function, the method further comprises:
receiving a fourth request message sent from the second access and mobility management function network function, wherein the fourth request message is used to request the first access and mobility management function network function to select a first location management function network function for providing a positioning service for the target UE; and
sending information of the first location management function network function to the second access and mobility management function network function based on the fourth request message.

9. The method of any of claims 1 to 8, wherein the network comprises a distributed network or a centralized network.

10. The method of any of claims 2 to 8, wherein the first access and mobility management function network function and the second access and mobility management function network function interact directly with each other, or interact indirectly through a third network.

11. A method for positioning message transmission, performed by a second access and mobility management function network function, comprising:
sending a positioning message to a first access and mobility management function network function, wherein the positioning message contains indication information, and the indication information is used to indicate the first access and mobility management function network function to send the positioning message to a first gateway mobile location center,
wherein the first gateway mobile location center and the first access and mobility management function network function are network nodes in a first network, and the second access and mobility management function network function is a network node in a second network.

12. The method of claim 11, wherein sending the positioning message to the first access and mobility management function network function comprises:
receiving a first request message sent, through the first access and mobility management function network function, from a first gateway mobile location center, wherein the first request message is used to request location information of a target user equipment, UE, accessing the second network, the first request message contains first indication information, and the first indication information is used to indicate the first access and mobility management function network function to send the first request message to the second access and mobility management function network function; and
sending a first response message to the first access and mobility management function network function based on the first request message, wherein the first response message comprises location information of the target UE and second indication information, and the second indication information is used to indicate the first access and mobility management function network function to send the first response message to the first gateway mobile location center.

13. The method of claim 11, wherein sending the positioning message to the first access and mobility management function network function comprises:
sending a second request message to the first access and mobility management function network function, wherein the second request message is used to provide a third network function accessing the first network with location information of a target user equipment, UE, accessing the second network, the second request message contains the location information of the target UE, information of the third network function and third indication information, and the third indication information is used to indicate the first access and mobility management function network function to send the second request message to the first gateway mobile location center.

14. The method of claim 12 or 13, wherein before sending the positioning message to the first access and mobility management function network function, the method further comprises:
sending a third request message to the first access and mobility management function network function, wherein the third request message is used to request the location information of the target UE, the third request message contains fifth indication information, and the fifth indication information is used to indicate the first access and mobility management function network function to send the third request message to a first location management function network function in the first network; and
receiving a third response message sent, through the first access and mobility management function network function, from the first location management function network function, wherein the third response message contains the location information of the target UE and sixth indication information, and the sixth indication information is used to indicate the first access and mobility management function network function to send the third response message to the second access and mobility management function network function.

15. The method of claim 14, wherein before sending the third request message to the first access and mobility management function network function, the method further comprises:
sending a fourth request message to the first access and mobility management function network function, wherein the fourth request message is used to request the first access and mobility management function network function to select a first location management function network function for providing a positioning service for the target UE; and
receiving information of the first location management function network function sent from the first access and mobility management function network function.

16. A method for positioning message transmission, performed by a first gateway mobile location center, comprising:
sending a positioning message to a first access and mobility management function network function, wherein the positioning message contains indication information, and the indication information is used to indicate the first access and mobility management function network function to send the positioning message to a second access and mobility management function network function,
wherein the first gateway mobile location center and the first access and mobility management function network function are network nodes in a first network, and the second access and mobility management function network function is a network node in a second network.

17. The method of claim 16, wherein sending the positioning message to the first access and mobility management function network function comprises:
sending a first request message to the first access and mobility management function network function, wherein the first request message is used to request location information of a target user equipment, UE, accessing the second network, the first request message contains first indication information, and the first indication information is used to indicate the first access and mobility management function network function to send the first request message to the second access and mobility management function network function.

18. The method of claim 16, wherein sending the positioning message to the first access and mobility management function network function comprises:
receiving a second request message sent, through the first access and mobility management function network function, from the second access and mobility management function network function, wherein the second request message is used to provide a third network function accessing the first network with location information of a target user equipment, UE, accessing the second network, the second request message contains the location information of the target UE, information of the third network function and third indication information, and the third indication information is used to indicate the first access and mobility management function network function to send the second request message to the first gateway mobile location center; and
sending a second response message to the first access and mobility management function network function based on the second request message, wherein the second response message is used to indicate whether the third network function successfully handles the location information of the target UE, the second response message comprises fourth indication information, and the fourth indication information is used to indicate the first access and mobility management function network function to send the second response message to the second access and mobility management function network function.

19. A method for positioning message transmission, performed by a user equipment, UE, comprising:
establishing a signaling connection between the UE and a second access and mobility management function network function based on a network triggered service request initiated by the second access and mobility management function network function,
wherein the network triggered service request is initiated by the second access and mobility management function network function based on a received first request message, wherein the first request message is sent from a first gateway mobile location center to the second access and mobility management function network function through a first access and mobility management function network function, the first request message is used to request location information of the UE, the first request message contains first indication information, and the first indication information is used to indicate the first access and mobility management function network function to send the first request message to the second access and mobility management function network function; and
wherein the first gateway mobile location center and the first access and mobility management function network function are network nodes in a first network, the second access and mobility management function network function is a network node in a second network, and the UE accesses the second network.

20. A method for positioning message transmission, performed by a user equipment, UE, comprising:
sending a fifth request message to a second access and mobility management function network function, wherein the fifth request message comprises information of a third network function, the fifth request message is used to trigger the second access and mobility management function network function to send a second request message to a first access and mobility management function network function, the second request message is used to provide the third network function with location information of the UE, the second request message comprises the location information of the UE, information of the third network function and third indication information, and the third indication information is used to indicate the first access and mobility management function network function to send the second request message to a first gateway mobile location center,
wherein the first gateway mobile location center and the first access and mobility management function network function are network nodes in a first network, the second access and mobility management function network function is a network node in a second network, the UE accesses the second network, and the third network function accesses the first network.

21. A first access and mobility management function network function, comprising a memory, a transceiver and a processor,
wherein the memory is used for storing a computer program, the transceiver is used for receiving and sending data under control of the processor, and the processor is used for reading the computer program in the memory and performing the following operations:
receiving a positioning message sent from a first network function, wherein the positioning message contains indication information, and the indication information is used to indicate the first access and mobility management function network function to send the positioning message to a second network function, wherein the first network function and the second network function are in different networks, and the first network function or the second network function is in a same network with the first access and mobility management function network function; and
sending the positioning message to the second network function based on the indication information.

22. The first access and mobility management function network function of claim 21, wherein receiving the positioning message sent from the first network function comprises:
receiving a positioning message sent from a first gateway mobile location center, wherein the positioning message contains indication information, and the indication information is used to indicate the first access and mobility management function network function to send the positioning message to a second access and mobility management function network function; or
receiving a positioning message sent from a second access and mobility management function network function, wherein the positioning message contains indication information, and the indication information is used to indicate the first access and mobility management function network function to send the positioning message to a first gateway mobile location center,
wherein the first gateway mobile location center and the first access and mobility management function network function are network nodes in a first network, and the second access and mobility management function network function is a network node in a second network.

23. The first access and mobility management function network function of claim 22, wherein receiving the positioning message sent from the first gateway mobile location center comprises:
receiving a first request message sent from the first gateway mobile location center, wherein the first request message is used to request location information of a target user equipment, UE, accessing the second network, the first request message contains first indication information, and the first indication information is used to indicate the first access and mobility management function network function to send the first request message to the second access and mobility management function network function.

24. The first access and mobility management function network function of claim 23, wherein the operations further comprise:
receiving a first response message sent from the second access and mobility management function network function, wherein the first response message comprises location information of the target UE and second indication information, and the second indication information is used to indicate the first access and mobility management function network function to send the first response message to the first gateway mobile location center.

25. The first access and mobility management function network function of claim 22, wherein receiving the positioning message sent from the second access and mobility management function network function comprises:
receiving a second request message sent from the second access and mobility management function network function, wherein the second request message is used to provide a third network function accessing the first network with location information of a target user equipment, UE, accessing the second network, the second request message contains the location information of the target UE, information of the third network function and third indication information, and the third indication information is used to indicate the first access and mobility management function network function to send the second request message to the first gateway mobile location center.

26. The first access and mobility management function network function of claim 25, wherein the operations further comprise:
receiving a second response message sent from the first gateway mobile location center, wherein the second response message is used to indicate whether the third network function successfully handles the location information of the target UE, the second response message comprises fourth indication information, and the fourth indication information is used to indicate the first access and mobility management function network function to send the second response message to the second access and mobility management function network function.

27. The first access and mobility management function network function of claim 24 or 25, wherein before receiving the first response message sent from the second access and mobility management function network function, or before receiving the second request message sent from the second access and mobility management function network function, the operations further comprise:
receiving a third request message sent from the second access and mobility management function network function, wherein the third request message is used to request the location information of the target UE, the third request message contains fifth indication information, and the fifth indication information is used to indicate the first access and mobility management function network function to send the third request message to a first location management function network function in the first network; and
receiving a third response message sent from the first location management function network function, wherein the third response message contains the location information of the target UE and sixth indication information, and the sixth indication information is used to indicate the first access and mobility management function network function to send the third response message to the second access and mobility management function network function.

28. The first access and mobility management function network function of claim 27, wherein before receiving the third request message sent from the second access and mobility management function network function, the operations further comprise:
receiving a fourth request message sent from the second access and mobility management function network function, wherein the fourth request message is used to request the first access and mobility management function network function to select a first location management function network function for providing a positioning service for the target UE; and
sending information of the first location management function network function to the second access and mobility management function network function based on the fourth request message.

29. The first access and mobility management function network function of any of claims 21 to 28, wherein the network comprises a distributed network or a centralized network.

30. The first access and mobility management function network function of any of claims 22 to 28, wherein the first access and mobility management function network function and the second access and mobility management function network function interact directly with each other, or interact indirectly through a third network.

31. A second access and mobility management function network function, comprising a memory, a transceiver and a processor,
wherein the memory is used for storing a computer program, the transceiver is used for receiving and sending data under control of the processor, and the processor is used for reading the computer program in the memory and performing the following operations:
sending a positioning message to a first access and mobility management function network function, wherein the positioning message contains indication information, and the indication information is used to indicate the first access and mobility management function network function to send the positioning message to a first gateway mobile location center,
wherein the first gateway mobile location center and the first access and mobility management function network function are network nodes in a first network, and the second access and mobility management function network function is a network node in a second network.

32. The second access and mobility management function network function of claim 31, wherein sending the positioning message to the first access and mobility management function network function comprises:
receiving a first request message sent, through the first access and mobility management function network function, from a first gateway mobile location center, wherein the first request message is used to request location information of a target user equipment, UE, accessing the second network, the first request message contains first indication information, and the first indication information is used to indicate the first access and mobility management function network function to send the first request message to the second access and mobility management function network function; and
sending a first response message to the first access and mobility management function network function based on the first request message, wherein the first response message comprises location information of the target UE and second indication information, and the second indication information is used to indicate the first access and mobility management function network function to send the first response message to the first gateway mobile location center.

33. The second access and mobility management function network function of claim 31, wherein sending the positioning message to the first access and mobility management function network function comprises:
sending a second request message to the first access and mobility management function network function, wherein the second request message is used to provide a third network function accessing the first network with location information of a target user equipment, UE, accessing the second network, the second request message contains the location information of the target UE, information of the third network function and third indication information, and the third indication information is used to indicate the first access and mobility management function network function to send the second request message to the first gateway mobile location center.

34. The second access and mobility management function network function of claim 32 or 33, wherein before sending the positioning message to the first access and mobility management function network function, the operations further comprise:
sending a third request message to the first access and mobility management function network function, wherein the third request message is used to request the location information of the target UE, the third request message contains fifth indication information, and the fifth indication information is used to indicate the first access and mobility management function network function to send the third request message to a first location management function network function in the first network; and
receiving a third response message sent, through the first access and mobility management function network function, from the first location management function network function, wherein the third response message contains the location information of the target UE and sixth indication information, and the sixth indication information is used to indicate the first access and mobility management function network function to send the third response message to the second access and mobility management function network function.

35. The second access and mobility management function network function of claim 34, wherein before sending the third request message to the first access and mobility management function network function, the operations further comprise:
sending a fourth request message to the first access and mobility management function network function, wherein the fourth request message is used to request the first access and mobility management function network function to select a first location management function network function for providing a positioning service for the target UE; and
receiving information of the first location management function network function sent from the first access and mobility management function network function.

36. A first gateway mobile location center, comprising a memory, a transceiver and a processor,
wherein the memory is used for storing a computer program, the transceiver is used for receiving and sending data under control of the processor, and the processor is used for reading the computer program in the memory and performing the following operations:
sending a positioning message to a first access and mobility management function network function, wherein the positioning message contains indication information, and the indication information is used to indicate the first access and mobility management function network function to send the positioning message to a second access and mobility management function network function,
wherein the first gateway mobile location center and the first access and mobility management function network function are network nodes in a first network, and the second access and mobility management function network function is a network node in a second network.

37. The first gateway mobile location center of claim 36, wherein sending the positioning message to the first access and mobility management function network function comprises:
sending a first request message to the first access and mobility management function network function, wherein the first request message is used to request location information of a target user equipment, UE, accessing the second network, the first request message contains first indication information, and the first indication information is used to indicate the first access and mobility management function network function to send the first request message to the second access and mobility management function network function.

38. The first gateway mobile location center of claim 36, wherein sending the positioning message to the first access and mobility management function network function comprises:
receiving a second request message sent, through the first access and mobility management function network function, from the second access and mobility management function network function, wherein the second request message is used to provide a third network function accessing the first network with location information of a target user equipment, UE, accessing the second network, the second request message contains the location information of the target UE, information of the third network function and third indication information, and the third indication information is used to indicate the first access and mobility management function network function to send the second request message to the first gateway mobile location center; and
sending a second response message to the first access and mobility management function network function based on the second request message, wherein the second response message is used to indicate whether the third network function successfully handles the location information of the target UE, the second response message comprises fourth indication information, and the fourth indication information is used to indicate the first access and mobility management function network function to send the second response message to the second access and mobility management function network function.

39. A user equipment, UE, comprising a memory, a transceiver and a processor,
wherein the memory is used for storing a computer program, the transceiver is used for receiving and sending data under control of the processor, and the processor is used for reading the computer program in the memory and performing the following operations:
establishing a signaling connection between the UE and a second access and mobility management function network function based on a network triggered service request initiated by the second access and mobility management function network function,
wherein the network triggered service request is initiated by the second access and mobility management function network function based on a received first request message, wherein the first request message is sent from a first gateway mobile location center to the second access and mobility management function network function through a first access and mobility management function network function, the first request message is used to request location information of the UE, the first request message contains first indication information, and the first indication information is used to indicate the first access and mobility management function network function to send the first request message to the second access and mobility management function network function; and
wherein the first gateway mobile location center and the first access and mobility management function network function are network nodes in a first network, the second access and mobility management function network function is a network node in a second network, and the UE accesses the second network.

40. A user equipment, UE, comprising a memory, a transceiver and a processor,
wherein the memory is used for storing a computer program, the transceiver is used for receiving and sending data under control of the processor, and the processor is used for reading the computer program in the memory and performing the following operations:
sending a fifth request message to a second access and mobility management function network function, wherein the fifth request message comprises information of a third network function, the fifth request message is used to trigger the second access and mobility management function network function to send a second request message to a first access and mobility management function network function, the second request message is used to provide the third network function with location information of the UE, the second request message comprises the location information of the UE, information of the third network function and third indication information, and the third indication information is used to indicate the first access and mobility management function network function to send the second request message to a first gateway mobile location center,
wherein the first gateway mobile location center and the first access and mobility management function network function are network nodes in a first network, the second access and mobility management function network function is a network node in a second network, the UE accesses the second network, and the third network function accesses the first network.

41. An apparatus for positioning message transmission, for use in a first access and mobility management function network function, comprising:
a first receiving unit, used for receiving a positioning message sent from a first network function, wherein the positioning message contains indication information, and the indication information is used to indicate the first access and mobility management function network function to send the positioning message to a second network function, wherein the first network function and the second network function are in different networks, and the first network function or the second network function is in a same network with the first access and mobility management function network function; and
a first sending unit, used for sending the positioning message to the second network function based on the indication information.

42. The apparatus of claim 41, wherein receiving the positioning message sent from the first network function comprises:
receiving a positioning message sent from a first gateway mobile location center, wherein the positioning message contains indication information, and the indication information is used to indicate the first access and mobility management function network function to send the positioning message to a second access and mobility management function network function; or
receiving a positioning message sent from a second access and mobility management function network function, wherein the positioning message contains indication information, and the indication information is used to indicate the first access and mobility management function network function to send the positioning message to a first gateway mobile location center,
wherein the first gateway mobile location center and the first access and mobility management function network function are network nodes in a first network, and the second access and mobility management function network function is a network node in a second network.

43. The apparatus of claim 42, wherein receiving the positioning message sent from the first gateway mobile location center comprises:
receiving a first request message sent from the first gateway mobile location center, wherein the first request message is used to request location information of a target user equipment, UE, accessing the second network, the first request message contains first indication information, and the first indication information is used to indicate the first access and mobility management function network function to send the first request message to the second access and mobility management function network function.

44. The apparatus of claim 43, wherein the first receiving unit is further used for:
receiving a first response message sent from the second access and mobility management function network function, wherein the first response message comprises location information of the target UE and second indication information, and the second indication information is used to indicate the first access and mobility management function network function to send the first response message to the first gateway mobile location center.

45. The apparatus of claim 42, wherein receiving the positioning message sent from the second access and mobility management function network function comprises:
receiving a second request message sent from the second access and mobility management function network function, wherein the second request message is used to provide a third network function accessing the first network with location information of a target user equipment, UE, accessing the second network, the second request message contains the location information of the target UE, information of the third network function and third indication information, and the third indication information is used to indicate the first access and mobility management function network function to send the second request message to the first gateway mobile location center.

46. The apparatus of claim 45, wherein the first receiving unit is further used for:
receiving a second response message sent from the first gateway mobile location center, wherein the second response message is used to indicate whether the third network function successfully handles the location information of the target UE, the second response message comprises fourth indication information, and the fourth indication information is used to indicate the first access and mobility management function network function to send the second response message to the second access and mobility management function network function.

47. The apparatus of claim 44 or 45, wherein the first receiving unit is further used for:
receiving a third request message sent from the second access and mobility management function network function, wherein the third request message is used to request the location information of the target UE, the third request message contains fifth indication information, and the fifth indication information is used to indicate the first access and mobility management function network function to send the third request message to a first location management function network function in the first network; and
receiving a third response message sent from the first location management function network function, wherein the third response message contains the location information of the target UE and sixth indication information, and the sixth indication information is used to indicate the first access and mobility management function network function to send the third response message to the second access and mobility management function network function.

48. The apparatus of claim 47, wherein the first receiving unit is further used for:
receiving a fourth request message sent from the second access and mobility management function network function, wherein the fourth request message is used to request the first access and mobility management function network function to select a first location management function network function for providing a positioning service for the target UE; and
wherein the first sending unit is further used for:
sending information of the first location management function network function to the second access and mobility management function network function based on the fourth request message.

49. The apparatus of any of claims 41 to 48, wherein the network comprises a distributed network or a centralized network.

50. The apparatus of any of claims 42 to 48, wherein the first access and mobility management function network function and the second access and mobility management function network function interact directly with each other, or interact indirectly through a third network.

51. An apparatus for positioning message transmission, for use in a second access and mobility management function network function, comprising:
a second sending unit, used for sending a positioning message to a first access and mobility management function network function, wherein the positioning message contains indication information, and the indication information is used to indicate the first access and mobility management function network function to send the positioning message to a first gateway mobile location center,
wherein the first gateway mobile location center and the first access and mobility management function network function are network nodes in a first network, and the second access and mobility management function network function is a network node in a second network.

52. The apparatus of claim 51, wherein sending the positioning message to the first access and mobility management function network function comprises:
receiving a first request message sent, through the first access and mobility management function network function, from a first gateway mobile location center, wherein the first request message is used to request location information of a target user equipment, UE, accessing the second network, the first request message contains first indication information, and the first indication information is used to indicate the first access and mobility management function network function to send the first request message to the second access and mobility management function network function; and
sending a first response message to the first access and mobility management function network function based on the first request message, wherein the first response message comprises location information of the target UE and second indication information, and the second indication information is used to indicate the first access and mobility management function network function to send the first response message to the first gateway mobile location center.

53. The apparatus of claim 51, wherein sending the positioning message to the first access and mobility management function network function comprises:
sending a second request message to the first access and mobility management function network function, wherein the second request message is used to provide a third network function accessing the first network with location information of a target user equipment, UE, accessing the second network, the second request message contains the location information of the target UE, information of the third network function and third indication information, and the third indication information is used to indicate the first access and mobility management function network function to send the second request message to the first gateway mobile location center.

54. The apparatus of claim 52 or 53, wherein the second sending unit is further used for:
sending a third request message to the first access and mobility management function network function, wherein the third request message is used to request the location information of the target UE, the third request message contains fifth indication information, and the fifth indication information is used to indicate the first access and mobility management function network function to send the third request message to a first location management function network function in the first network; and
wherein the apparatus further comprises a second receiving unit, used for:
receiving a third response message sent, through the first access and mobility management function network function, from the first location management function network function, wherein the third response message contains the location information of the target UE and sixth indication information, and the sixth indication information is used to indicate the first access and mobility management function network function to send the third response message to the second access and mobility management function network function.

55. The apparatus of claim 54, wherein the second sending unit is further used for:
sending a fourth request message to the first access and mobility management function network function, wherein the fourth request message is used to request the first access and mobility management function network function to select a first location management function network function for providing a positioning service for the target UE; and
receiving information of the first location management function network function sent from the first access and mobility management function network function.

56. An apparatus for positioning message transmission, for use in a first gateway mobile location center, comprising:
a third sending unit, used for sending a positioning message to a first access and mobility management function network function, wherein the positioning message contains indication information, and the indication information is used to indicate the first access and mobility management function network function to send the positioning message to a second access and mobility management function network function,
wherein the first gateway mobile location center and the first access and mobility management function network function are network nodes in a first network, and the second access and mobility management function network function is a network node in a second network.

57. The apparatus of claim 56, wherein sending the positioning message to the first access and mobility management function network function comprises:
sending a first request message to the first access and mobility management function network function, wherein the first request message is used to request location information of a target user equipment, UE, accessing the second network, the first request message contains first indication information, and the first indication information is used to indicate the first access and mobility management function network function to send the first request message to the second access and mobility management function network function.

58. The apparatus of claim 56, wherein sending the positioning message to the first access and mobility management function network function comprises:
receiving a second request message sent, through the first access and mobility management function network function, from the second access and mobility management function network function, wherein the second request message is used to provide a third network function accessing the first network with location information of a target user equipment, UE, accessing the second network, the second request message contains the location information of the target UE, information of the third network function and third indication information, and the third indication information is used to indicate the first access and mobility management function network function to send the second request message to the first gateway mobile location center; and
sending a second response message to the first access and mobility management function network function based on the second request message, wherein the second response message is used to indicate whether the third network function successfully handles the location information of the target UE, the second response message comprises fourth indication information, and the fourth indication information is used to indicate the first access and mobility management function network function to send the second response message to the second access and mobility management function network function.

59. An apparatus for positioning message transmission, for use in a user equipment, UE, comprising:
a signaling connection establishing unit, used for establishing a signaling connection between the UE and a second access and mobility management function network function based on a network triggered service request initiated by the second access and mobility management function network function,
wherein the network triggered service request is initiated by the second access and mobility management function network function based on a received first request message, wherein the first request message is sent from a first gateway mobile location center to the second access and mobility management function network function through a first access and mobility management function network function, the first request message is used to request location information of the UE, the first request message contains first indication information, and the first indication information is used to indicate the first access and mobility management function network function to send the first request message to the second access and mobility management function network function; and
wherein the first gateway mobile location center and the first access and mobility management function network function are network nodes in a first network, the second access and mobility management function network function is a network node in a second network, and the UE accesses the second network.

60. An apparatus for positioning message transmission, for use in a user equipment, UE, comprising:
a fourth sending unit, used for sending a fifth request message to a second access and mobility management function network function, wherein the fifth request message comprises information of a third network function, the fifth request message is used to trigger the second access and mobility management function network function to send a second request message to a first access and mobility management function network function, the second request message is used to provide the third network function with location information of the UE, the second request message comprises the location information of the UE, information of the third network function and third indication information, and the third indication information is used to indicate the first access and mobility management function network function to send the second request message to a first gateway mobile location center,
wherein the first gateway mobile location center and the first access and mobility management function network function are network nodes in a first network, the second access and mobility management function network function is a network node in a second network, the UE accesses the second network, and the third network function accesses the first network.

61. A computer-readable storage medium, wherein the computer-readable storage stores a computer program, and the computer program is used to cause a computer to perform the method of any of claims 1 to 10, or the method of any of claims 11 to 15, or the method of any of claims 16 to 18, or the method of claim 19, or the method of claim 20.
